# EUROPEAN PATENT APPLICATION

(11) **EP 4 629 723 A1**
(43) Date of publication of application: **08.10.2025**
(21) Application number: 22967186.2
(22) Date of filing: 30.11.2022
(51) Int. Cl.: H04W 72/044, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/044269
(87) International publication number: WO 2024/116353

(57) **Abstract**

A terminal according to an aspect of the present disclosure includes: a receiving section that receives, when a combination of a category-1 demodulation reference signal (DMRS) port and a category-2 DMRS port in at least one code division multiplexing (CDM) group is supported, downlink control information (DCI) indicating the combination and scheduling a shared channel for two codewords; and a control section that controls transmission or reception of the shared channel on the basis of the combination, wherein the combination includes an entry indicating at least one of a DMRS port across the CDM group and a DMRS port corresponding to a plurality of transmission/reception points. An aspect of the present disclosure enables communication to be appropriately controlled even when the number of DMRS ports is increased as compared with any existing system.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel-18 NR), it is under study to increase the number of demodulation reference signal (DMRS) ports. Such a new DMRS port different from an existing DMRS port (also referred to as a Rel-15 DMRS port) is also referred to as a Rel-18 DMRS port.

Meanwhile, studies have not sufficiently been made on an antenna port table to be referred to in a case where a Rel-18 DMRS port with the number of DMRS ports increased is introduced. Unless this is appropriately defined, no suitable improvement in communication throughput/communication quality may be provided.

In view of this, the present disclosure has one object to provide a terminal, a radio communication method, and a base station that enable communication to be appropriately controlled even when the number of DMRS ports is increased as compared with any existing system (for example, Rel-17 NR).

### Solution to Problem

A terminal according to an aspect of the present disclosure includes: a receiving section that receives, when a combination of a category-1 demodulation reference signal (DMRS) port and a category-2 DMRS port in at least one code division multiplexing (CDM) group is supported, downlink control information (DCI) indicating the combination and scheduling a shared channel for two codewords; and a control section that controls transmission or reception of the shared channel on a basis of the combination, wherein the combination includes an entry indicating at least one of a DMRS port across the CDM group and a DMRS port corresponding to a plurality of transmission/reception points.

### Advantageous Effects of Invention

An aspect of the present disclosure enables communication to be appropriately controlled even when the number of DMRS ports is increased as compared with any existing system.

### Brief Description of Drawings

[FIG. 1] FIG. 1 shows an example of an existing DMRS port table for DMRS configuration type 1.
[FIG. 2] FIG. 2 shows an example of an existing DMRS port table for DMRS configuration type 2.
[FIG. 3] FIG. 3 shows an example of an antenna port table in a case of DMRS type = enhanced type 1 and maximum DMRS length = 1, according to a first embodiment.
[FIG. 4] FIG. 4 shows an example of another antenna port table in a case of DMRS type = enhanced type 1 and maximum DMRS length = 1, according to the first embodiment.
[FIG. 5] FIG. 5 shows another example of another antenna port table in a case of DMRS type = enhanced type 1 and maximum DMRS length = 1, according to the first embodiment.
[FIG. 6] FIG. 6 shows an example of a limitation prescription for MU-MIMO according to another aspect of the first embodiment.
[FIG. 7] FIG. 7 shows an example of a limitation prescription for MU-MIMO according to another aspect of the first embodiment.
[FIG. 8] FIG. 8 shows an example of a table to be a base of an antenna port table in a case of DMRS type = enhanced type 1 and maximum DMRS length = 2, according to a second embodiment.
[FIG. 9] FIG. 9 shows an example of a table to be a base of an antenna port table in a case of DMRS type = enhanced type 1 and maximum DMRS length = 2, according to the second embodiment.
[FIG. 10] FIG. 10 shows an example of a table to be a base of an antenna port table in a case of DMRS type = enhanced type 2 and maximum DMRS length = 1, according to a third embodiment.
[FIG. 11] FIG. 11 shows an example of a table to be a base of an antenna port table in a case of DMRS type = enhanced type 2 and maximum DMRS length = 1, according to the third embodiment.
[FIG. 12] FIG. 12 shows an example of a table to be a base of an antenna port table in a case of DMRS type = enhanced type 2 and maximum DMRS length = 2, according to a fourth embodiment.
[FIG. 13] FIG. 13 shows an example of a table to be a base of an antenna port table in a case of DMRS type = enhanced type 2 and maximum DMRS length = 2, according to the fourth embodiment.
[FIG. 14] FIG. 14 shows an example of a table to be a base of an antenna port table in a case of DMRS type = enhanced type 2 and maximum DMRS length = 2, according to the fourth embodiment.
[FIG. 15] FIG. 15 is a diagram to show an example of a schematic structure of a radio communication system according to one embodiment.
[FIG. 16] FIG. 16 is a diagram to show an example of a structure of a base station according to one embodiment.
[FIG. 17] FIG. 17 is a diagram to show an example of a structure of a user terminal according to one embodiment.
[FIG. 18] FIG. 18 is a diagram to show an example of a hardware structure of the base station and the user terminal according to one embodiment.
[FIG. 19] FIG. 19 is a diagram to show an example of a vehicle according to one embodiment.

### Description of Embodiments

### (DMRS)

A front-loaded demodulation reference signal (DMRS) is the first DMRS (DMRS in the first symbol or a symbol near the first symbol) for faster demodulation. An additional DMRS can be configured by RRC, for a high speed moving terminal (user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding=disabled) and DFT-S-OFDM (transport precoding=enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

The double-symbol DMRS is used for more DMRS ports (especially for multi user multi input multi output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC having a length of 2. Between a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC. In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

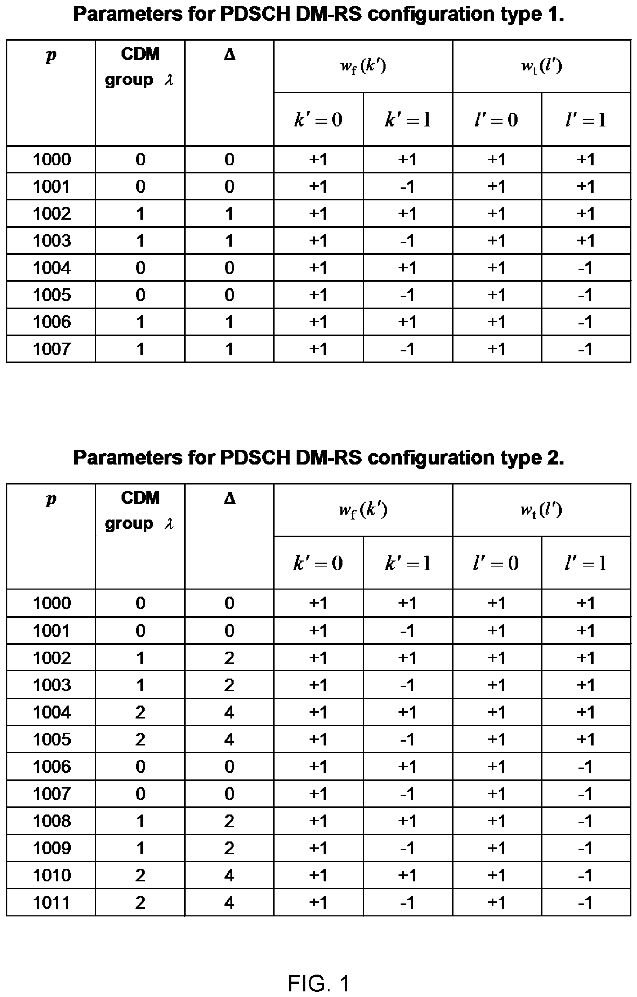

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

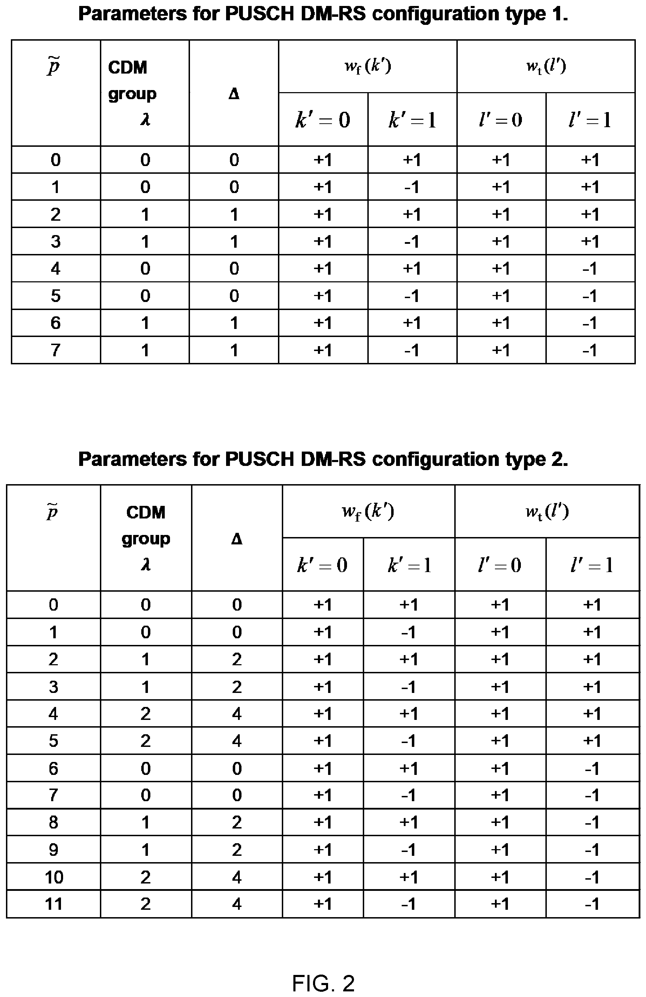

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

### (Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), different DMRS ports / CSI-RS ports may be configured for each layer. For multi user MIMO (MU-MIMO), different DMRS ports / CSI-RS ports may be configured for each layer in one UE and for each UE.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2+2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for an FD-OCC and a parameter (which may be referred to as a sequence element or the like) wₜ(l') for a TD-OCC.

Both of the TD-OCC and FD-OCC for the DMRS of Rel-15 NR correspond to an OCC of a sequence length (which may be referred to as an OCC length)=2. For example, Rel-15 type 1/type 2 DMRS ports (for example, rel.15 Type1/Type2 DMRS ports) may be defined with DMRS ports having an FD-OCC length of 2 (for example, DMRS ports with FD-OCC length = 2).

Thus, respective possible values of k' and l' described above are both 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and Δ indicate an antenna port number and a parameter for shifting (offsetting) a frequency resource, respectively.

For example, {w_{f}(0), w_{f}(1)}={+1, +1} and {w_{f}(0), w_{f}(1)}={+1, - 1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)}={+1, +1} and {wₜ(0), wₜ(1)}={+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.
{Case 1} Single-symbol DMRS of DMRS configuration type 1
   A total number of DMRS ports is 2 (with comb/FDM) x 2 (with FD OCC) = 4 ports.
{Case 2} Double-symbol DMRS of DMRS configuration type 1
   A total number of DMRS ports is 2 (with comb/FDM) x 2 (with FD OCC) x 2 (with TD OCC) = 8 ports.
{Case 3} Single-symbol DMRS of DMRS configuration type 2
   A total number of DMRS ports is 3 (with FDM) x 2 (with FD OCC) = 6 ports.
{Case 4} Double-symbol DMRS of DMRS configuration type 2
   A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.
<Option 1>
   - Introduction of a new OCC having a length (for example, 4 or 6) greater than that of an existing OCC.
      In Option 1, items to be studied include a possibility of performance degradation, a possibility of scheduling restriction, backward compatibility, and the like in a case of a large delay spread.
<Option 2>
   - Use of a TD-OCC over a plurality of non-consecutive DMRS symbols (for example, a TD-OCC over a front-loaded DMRS / additional DMRS) .
      In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.
<Option 3>
   - Increasing the number of CDM groups (for example, increasing the number of combs / times of FDM).
      In Option 3, items to be studied include a possibility of performance degradation, backward compatibility, and the like in a case of a large delay spread.
<Option 4>
   - Increasing the number of orthogonal DMRS ports by reusing additional DMRS symbols.
      In Option 4, items to be studied include a possibility of performance degradation, a possibility of a limited DMRS configuration (for example, the number of additional DMRSs is limited), backward compatibility, and the like in a case of a high UE speed.
<Option 5>
   - Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

Option 1/3 may be supported. In addition, a TD OCC may be supported. A difference between Options 2 and 5 may be whether to support RRC-based semi-static switching between an FD-OCC and a TD-OCC or DCI-based dynamic switching between an FD-OCC and a TD-OCC.

In Option 5 for the method of increasing the number of DMRS ports described above, a new FD-OCC having a length of 4 may be applied, a new TD-OCC having a length of 2 may be applied to a plurality of non-consecutive DMRS symbols, and the number of DMRS ports in one CDM group may be four. In this case, a reception side decodes one of the FD-OCC and the TD-OCC, thereby allowing signals to be separated from each other, which has an advantage over Option 1/3. For example, the reception side can perform decoding by using only the FD-OCC when using the TD-OCC causes issues such as a case that a characteristic (orthogonality) deteriorates in high-speed movement, a case that channel estimation cannot be started even when only a front-loaded DMRS symbol is received, which requires an additional DMRS symbol to be received, thus leading to delay in PDSCH decoding, and the like. For example, the reception side can perform decoding by using only the TD-OCC when using the FD-OCC causes issues such as a case that a characteristic (orthogonality) deteriorates in a case of a large delay spread, and the like.

In Option 5 for increasing the number of DMRS ports described above, a new FD-OCC having a length of 6 may be applied, and a new TD-OCC having a length of 2 may be applied to a plurality of non-consecutive DMRS symbols.

As described above, in Rel. 18 or later versions, a new FD-OCC having a length longer than 2 is supported. A DMRS port for type 1/type 2 for Rel. 18 or later versions may be referred to as a Rel-18 enhanced-type-1/enhanced-type-2 (enhanced type 1/enhanced type 2) DMRS port, for example. Enhanced type 1/enhanced type 2 may be referred to as e-type 1/e-type 2.

For example, Rel-18 e-type-1/e-type-2 DMRS ports may be defined with DMRS ports having an FD-OCC length longer than 2 (for example, DMRS ports with FD-OCC length > 2). For example, a Rel-18 e-type-1/e-type-2 DMRS port may be of FD-OCC length = 4.

Note that a type-1/type-2 DMRS port with FD-OCC length = 2 defined from Rel. 15 may be referred to as a Rel-15 type-1/type-2 DMRS port.

The Rel-18 e-type-1 DMRS port may have port index p = #1000 to 1015. For example, for DMRS ports with new FD-OCC #0, 1, DMRS port indices (DMRS ports #1000 to #1007) the same as that of the Rel-15 DMRS ports may be used. For DMRS ports with new FD-OCC #2, 3, DMRS port indices (DMRS ports #1008 to #1015) different from that of the Rel-15 DMRS ports may be used.

The Rel-18 e-type-2 DMRS port may have port index p = #1000 to 1023. For DMRS ports with new FD-OCC #0, 1, DMRS port indices (DMRS ports #1000 to #1011) the same as that of the Rel-15 DMRS ports may be used. For DMRS ports with new FD-OCC #2, 3, DMRS port indices (DMRS ports #1012 to #1023) different from that of the Rel-15 DMRS ports may be used.

Incidentally, it is expected to control, when the Rel-18 DMRS ports are used, scheduling of a PUSCH/PDSCH for two codewords (CWs). Meanwhile, studies have not sufficiently been made on an antenna port table and the like to be referred to in such a case. Unless this is clearly defined, no suitable improvement in communication throughput/communication quality may be provided.

In view of this, the inventors of the present invention came up with the idea of a control method in a case of the Rel-18 DMRS ports being defined.

Embodiments according to the present disclosure will be described in detail with reference to the drawings as follows. Note that the embodiments (for example, respective cases) to be described below may each be used individually, or at least two of the embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC protocol data unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

Note that a CORESET pool and a CORESET pool index may be interchangeably interpreted.

In the present disclosure, description "Rel. XX" represents 3GPP release. Note, however, that the release number "XX " is an example, and may be replaced with another number.

In the present disclosure, a DMRS, a DL DMRS, a UL DMRS, a PDSCH DMRS and a PUSCH DMRS may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type1 (or DMRS type=1) may mean that an RRC parameter "dmrs-Type" is not configured (for example, an RRC parameter "dmrs-Type" is absent in a DMRS configuration (DMRS-DownlinkConfig information element / DMRS-UplinkConfig information element), or may mean that "1" (or type 1 (type1)) is configured as an RRC parameter related to a DMRS type.

In the present disclosure, a maximum DMRS length=1 may mean that an RRC parameter "maxLength" is not configured (for example, an RRC parameter "maxLength" is absent in a DMRS configuration (DMRS-DownlinkConfig information element / DMRS-UplinkConfig information element), or may mean that "1" (or a length of 1 (len1)) is configured as an RRC parameter related to a maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. One codeword being applied and the number of layers being 4 layers or less may be interchangeably interpreted. Two codewords being applied and the number of layers being greater than 4 layers may be interchangeably interpreted.

In the present disclosure, "transform precoding being configured" may be interchangeably interpreted as "transform precoding being configured to be enabled."

Note that, in the present disclosure, "having capability of ..." may be interchangeably interpreted as "supporting/reporting capability of ...."

In the present disclosure, a table and one or a plurality of tables may be interchangeably interpreted.

In the present disclosure, STxMP, SiMPUL, simultaneous transmission using multi-panel, multi-panel simultaneous transmission, and multi-panel simultaneous UL transmission may be interchangeably interpreted. STxMP may mean that one PUSCH/PUCCH/SRS is indicated/configured with a plurality of joint/UL TCI states, spatial relations, or beams. In the present disclosure, supporting and being configured/indicated may be interchangeably interpreted. In the present disclosure, transmit power and output power may be interchangeably interpreted. In the present disclosure, determination by a UE and configuration/indication by a network (base station/gNB) may be interchangeably interpreted.

In the present disclosure, a UL panel, a UE panel, a (same) antenna coherent group, a UL/joint TCI, a spatial relation, a PL-RS, and a (same) destination TRP may be interchangeably interpreted.

In the present disclosure, 8Tx and UL transmission with more than 4 layers/ranks may be interchangeably interpreted.

In the present disclosure, a Rel-15 DMRS port, a Rel-15 type-1/2 DMRS port, and an existing DMRS port may be interchangeably interpreted. In the present disclosure, a Rel-18 DMRS port, a Rel-18 enhanced-type-1/2 DMRS port, and a new DMRS port may be interchangeably interpreted. Note that a Rel-18 DMRS port may correspond to a DMRS port having the defined total number of ports twice or more (for example, twice, three times, four times, ...) as compared with a Rel-15 DMRS port.

In the present disclosure, a DMRS in a case where use of a Rel-15 DMRS port is configured or where no use of any Rel-18 DMRS port is configured (enabled) may be referred to as a Rel-15 DMRS. In the present disclosure, a DMRS in a case where use of a Rel-18 DMRS port is configured (enabled) may be referred to as a Rel-18 DMRS. From among Rel-15 DMRSs, a DMRS for type 1/2 may be referred to as a Rel-15 type-1/2 DMRS, or simply referred to as a type-1/2 DMRS or the like. From among Rel-18 DMRSs, a DMRS for enhanced type 1/2 may be referred to as a Rel-18 enhanced-type-1/2 DMRS, or simply referred to as an enhanced-type-1/2 DMRS or the like.

In the present disclosure, a Rel-15 DMRS configuration type, a DMRS configuration type, and a type may be interchangeably interpreted. A Rel-18 DMRS configuration type, an enhanced DMRS configuration type, an enhanced type, and an e-type may be interchangeably interpreted.

Note that a case that a UE is configured with enhanced type 1/2 may correspond to a case that DMRS type (for example, dmrs-Type) = enhanced type 1/2 is configured, or may correspond to a case that DMRS enhanced type (for example, dmrs-EType) = 1/2 is configured.

In the present disclosure, an antenna port table and an antenna port indication table may be interchangeably interpreted. In the present disclosure, a DMRS port combination, a combination of DMRS ports, and one or more DMRS ports corresponding to one value in an antenna port field may be interchangeably interpreted.

### (Radio Communication Method)

A DMRS port for a PDSCH may be specified by an antenna port field in a DCI format (for example, DCI format 1_1/1_2) for scheduling of the PDSCH.

A DMRS port for a PUSCH may be specified by an antenna port field in a DCI format (for example, DCI format 0_1/0_2) for scheduling of the PUSCH.

A UE may refer to a new antenna port table (which may be referred to as an antenna port table, an antenna port indication table, or the like) to judge an antenna port corresponding to a value of the antenna port field described above.

Note that a case that the UE uses a Rel-15 DMRS port may mean that antenna port indices p of p = #0 to #7 for type 1 and p = #0 to #11 for type 2 are used (usable). A case that the UE uses a Rel-18 DMRS port may mean that antenna port indices p of p = #0 to #15 (or #8 to #15) for type 1 and p = #0 to #23 (or #12 to #23) for type 2 are used (usable).

Note that, in the present disclosure, a port index for a PDSCH/PUSCH DMRS may correspond to a number (for example, #1000) obtained by adding 1000 to the illustrated number, or may correspond to the illustrated number itself (for example, #0). For a port index for a PDSCH/PUSCH DMRS, a port index for a PDSCH/PUSCH may correspond to a number obtained by adding or subtracting 1000 to or from the port index for the PDSCH/PUSCH DMRS, or may be the same as the port index for the PDSCH/PUSCH DMRS.

The new antenna port table described above may be a table for Rel-18 enhanced-type-1/2 DMRS ports. In the new antenna port table, it is preferable that a combination of DMRS ports of at least one of the following Categories 1 to 3 for maximum number (which may be referred to as maximum length and may be given by a higher layer parameter "maxLength") = 1 or 2 be included in a DCI codepoint (or row entry in the table):
- Category 1: only legacy DMRS ports (DMRS ports defined in up to Rel. 17, p = #0 to #7 for eType1, p = #0 to #11 for eType2)
- Category 2: only new DMRS ports (DMRS ports additionally defined in Rel. 18 or later versions, p = #8 to #15 for eType1, p = #12 to #23 for eType2)
- Category 3: legacy DMRS ports and new DMRS ports in at least one CDM group

A combination of new DMRS ports of Category 2 may be a combination that X is added to each port index in a combination of DMRS ports of Category 1. For example, X may be a number of 8 or larger (for example, 8) for eType1. X may be a number of 12 or larger (for example, 12) for eType2. X described above may be defined in advance in a standard, a UE may be configured with X by using higher layer signaling, or X may be judged based on a UE capability. X described above may be referred to as an offset indicator (offset index) or simply offset.

The legacy DMRS ports and new DMRS ports in Category 3 may correspond to, for example, the following combination.
- The number of ranks in a CDM group: 3 or 4
- A CDM group index: 0, 1 for eType1, 0, 1, 2 for eType2
- The number of CDM groups without data: 1, 2 for eType1, 1, 2, 3 for eType2

Note that the legacy DMRS ports and new DMRS ports in Category 3 may not need to include all the combinations described above. For example, regarding the number of CDM groups without data corresponding to the legacy DMRS ports and new DMRS ports in Category 3, (a codepoint corresponding to) 1, 2, or both may be defined in an antenna port table for eType1, or (a codepoint corresponding to) 1, 2, 3, or more than one of them may be defined in an antenna port table for eType2.

The DMRS ports in Category 3 may be legacy DMRS ports and new DMRS ports with a specific rank (for example, rank 3/4) in the same CDM group.

As a combination of legacy DMRS ports and new DMRS ports in at least one CDM group, the DMRS ports in Category 3 may include the following:
- four ports at maximum from among p = {#0, 1, 8, 9} or {#2, 3, 10, 11} for eType1
- four ports at maximum from among p = {#0, 1, 12, 13}, {#2, 3, 14, 15}, or {#4, 5, 16, 17} for eType2.
The combination described above may be applied at least to a single TRP.

In Category 3, in a case of up to rank 4, only one CDM group may be used per UE. In a case of rank 4 or more, a plurality of CDM groups may be used per UE.

In the embodiments below, although an example of an antenna port table for a PDSCH DMRS is described, a cover range of the present disclosure is not limited to this. For example, a (configuration method of) antenna port table of the following embodiments may be interpreted as a (configuration method of) antenna port table for a PUSCH DMRS as appropriate.

For example, DCI in the following embodiments may correspond to a DCI format (for example, DCI format 1_1/1_2) for a PDSCH or may correspond to a DCI format (for example, DCI format 0_1/0_2) for a PUSCH.

An antenna port table for a PUSCH DMRS, different from an antenna port table for a PDSCH DMRS, may include only a DMRS port for one rank. The number of ranks (number of layers) for a PUSCH DMRS may be indicated to a UE by using, for example, a precodinginformation-and-number-of-layers field.

Note that, although an example is shown where, in an antenna port table in the following embodiments, all the DMRS port combinations of Categories 1 to 3 described above is included in any DCI codepoint (or row entry in the table), the embodiment is not limited to this. For example, an antenna port table not including at least one of the DMRS port combinations of Categories 1, 2, and 3 may be configured/used based on details of the present disclosure.

Note that, in an antenna port table in the following embodiments, a column of "Notes" is of supplemental explanations and thus may not need to be included in the table (may not need to be defined). In an antenna port table in the following embodiments, all the rows for each category may not need to be defined (part of the rows may be omitted), and any row (combination) not described may be defined/added. In the antenna port table, a correspondence between a DMRS port index combination and the number of DMRS CDM groups without data, a row index, and a corresponding entry (various values in the table) may differ. In other words, the order of the rows may be changed.

In the present disclosure, a value of an antenna port field may be interpreted as a row index.

In the present disclosure, a single TRP may be interpreted as one transmission/reception point and multi-TRP may be interpreted as a plurality of transmission/reception points.

In antenna port tables in embodiments described below, (1) an antenna port table for a single TRP (for indication of operations of the single TRP) may include entries except at least entries indicated with []. Furthermore, (2) an antenna port table for multi-TRP (for indication of operations of the multi-TRP) may include, in addition to the entries of the above-described antenna port table for the single TRP, the entries indicated with []. The entries indicated with [] may be, for example, associated with a DMRS port across a CDM group (an antenna port corresponding to the multi-TRP).

In other words, the antenna port tables described below may be defined separately depending on the above-described (1), (2), or category. In this case, the antenna port table to be used may be switched in accordance with a scenario to be applied (single TRP/multi-TRP, or any of Categories 1 to 3). Switching (the number of rows in) the antenna port table in accordance with the scenario enables the antenna port table to be indicated flexibly and efficiently. The antenna port tables may be defined as one table in an integrated manner for the above-described (1) and (2).

The above-described scenario switching may be performed based on higher layer signaling. No scenario switching may be performed and only an antenna port table for multi-TRP may be used. In other words, the antenna port table for multi-TRP may also serve as an antenna port table for a single TRP.

A DMRS port for a PDSCH may be indicated by using, not limited to an antenna port field in a DCI format (for example, DCI format 1_1/1_2) for scheduling of the PDSCH, any combination of the antenna port field with another existing field, new DCI field, or these fields. Furthermore, using any combination of a new indicator with an existing field such as a Time Domain Resource Assignment/Allocation (TDRA) field/Frequency Domain Resource Assignment/Allocation (FDRA) field, a specific DMRS port may be indicated.

In the present disclosure, an antenna port table for a single TRP and an antenna port table for multi-TRP may be defined separately or a common antenna port table may be defined. In any of the antenna port tables, antenna port fields included in DCI format 1_1/1_2 may have separate sizes. In this case, an antenna port field for a single TRP may have a size smaller than that of an antenna port field for multi-TRP. More specifically, for example, the size of the antenna port field for the single TRP may be 4 bits and the size of the antenna port field for the multi-TRP may be 5 bits.

### <First Embodiment>

A first embodiment relates to an antenna port table for DMRS type = enhanced type 1 and maximum DMRS length = 1.

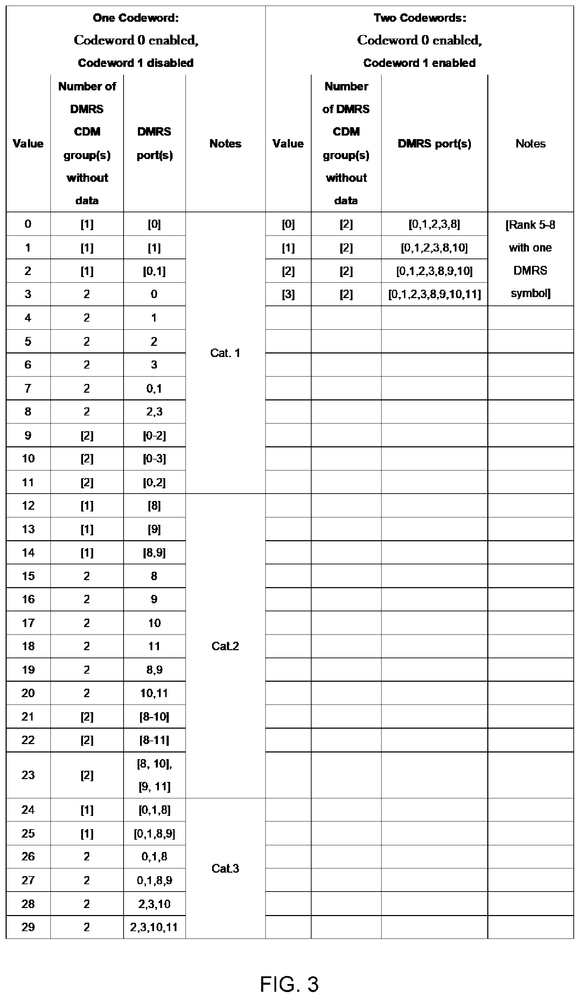

FIG. 3 shows an example of an antenna port table in a case of DMRS type = enhanced type 1 and maximum DMRS length = 1, according to the first embodiment.

Note that the left side of the table corresponds to four layers or less, and is referred to when a PDSCH with one codeword is scheduled. The right side of the table corresponds to five layers or more, and is referred to when a PDSCH with two codewords is scheduled.

In the example, (the left side of) the antenna port table includes a DMRS port combination including only category-1 DMRS ports (existing ports), a DMRS port combination including only category-2 DMRS ports (new ports), and a DMRS port combination including category-3 DMRS ports (both existing and new ports).

In the example, Values = 0 to 11 of an antenna port field in a case of one codeword correspond to Category 1, 12 to 23 correspond to Category 2, and 24 to 29 correspond to Category 3.

X described above for the category-2 DMRS ports in the example is X = 8 (the DMRS port indices corresponding to antenna port field values = 12 to 23 correspond to the respective indices obtained by making the DMRS port indices corresponding to antenna port field values = 0 to 11 plus 8 (having 8 added) each). X described above may be referred to as an offset indicator (offset index) or simply offset. In this case, the offset is expressed as + 8.

In the example, a DMRS port combination for category-3 DMRS ports (corresponding to antenna port field values = 24 to 29) includes only DMRS ports in the same CDM group, with respect to rank 3 or 4.

In the table of FIG. 3, Values = 0 to 3 of the antenna port field in a case of two codewords respectively correspond to ranks 5 to 8. Since maximum DMRS length = 1, with one DMRS symbol, DMRSs for two codewords can be transmitted.

Note that a UE may be configured with information on the maximum number of codewords possible to be scheduled by DCI (for example, an RRC parameter "maxNrofCodeWordsScheduledByDCI") by a base station, and that, when the information indicates a value greater than 1 and the DCI includes a plurality of specific fields (for example, MCS fields), the UE may judge to refer to the right side of the antenna port table.

With respect to the DMRS port combination in the case of one CW (the left half of the table) in the first embodiment, row entries (which may be simply referred to as entries) indicated with [] are specifically described.

In FIG. 3, entries with Values = 0 to 2, 12 to 14, and 24 to 25 of the antenna port field may be associated with the number of DMRS CDM groups without data = 1 (specifically, this means DMRSs and data are FDMed). The entries enable throughput of a UE to be maximized by multiplexing the data and DMRSs by FDM temporarily in accordance with traffic amount and the like, even in a case of MU-MIMO.

Entries with Values = 9 to 10 and 21 to 22 of the antenna port field may be associated with the number of DMRS CDM groups without data = 2. The entries may not need to be included for a single TRP. The entries may correspond to rank 3/4. For entries corresponding to rank 3/4, although Values = 26 and 27 already exist, providing entries other than these enables multiplexing for a UE efficiently in one CDM group. In other words, rather than multiplexing a plurality of UEs in the same CDM group, performing UE multiplexing in separate CDM groups makes it easier to ensure orthogonality. Meanwhile, in multi-TRP, it is possible to use DMRS ports of separate CDM groups. In multi-TRP, a received power difference from each TRP is assumed. With this, in a case where orthogonality between DMRS ports collapses (such as a case where frequency selectability is strong), interference, with respect to a DMRS port for a TRP with relatively weak received power, from a DMRS port for a TRP with relatively strong received power may cause characteristic degradation. Thus, the respective TRPs are preferable to use DMRS ports corresponding to separate CDM groups.

An entry with Value = 11 of the antenna port field may be associated with the number of DMRS CDM groups without data = 2 and DMRS ports = {0, 2}. With this entry, it is useful regardless of a single TRP/multi-TRP. For example, when the entry is selected, no MU-MIMO is applied (no available DMRS port is used for another UE), and thus the processing is simplified. For a UE that uses the entry (antenna port), another UE is not able to use any available DMRS port. Thus, in an entry with Value = 23 to be described below, a combination of DMRS ports = {8, 10} need not be defined. In other words, a gNB can only indicate either DMRS ports = {0, 2} or {8, 10}, preventing the gNB from indicating the respective DMRS ports to separate UEs at the same time.

The entry with Value = 23 of the antenna port field may be associated with the number of DMRS CDM groups without data = 2 and DMRS ports = {8, 10} and {9, 11}. For example, in a case where DMRS ports = {0, 1, 8} for certain UE #1 are indicated and DMRS ports = {2, 3, 10} for another UE #2 are indicated, indicating DMRS ports = {9, 11} to another UE #3 at the same time allowing orthogonal DMRS ports to be effectively used up to the limit.

The DMRS port combination in the case of two CWs (the right half of the table) in the first embodiment may include a combination other than the above-described example and, for ranks, at least one combination of the following may be defined:
- a combination of five indices from among port indices {0, 1, 2, 3, 8, 9, 10, 11}, for rank 5
- a combination of six indices from among port indices {0, 1, 2, 3, 8, 9, 10, 11}, for rank 6
- a combination of seven indices from among port indices {0, 1, 2, 3, 8, 9, 10, 11}, for rank 7
- a combination of eight indices from among port indices {0, 1, 2, 3, 8, 9, 10, 11}, for rank 8

The DMRS port combination in the case of one CW (the left half of the table) in the first embodiment may include a combination other than the above-described example and, for ranks, at least one combination of the following may be defined:
- a combination of one index from among port indices {0, 1, 2, 3, 8, 9, 10, 11}, for rank 1
- a combination of two indices from among port indices {0, 1, 2, 3, 8, 9, 10, 11}, for rank 2
- a combination of three indices from among port indices {0, 1, 2, 3, 8, 9, 10, 11}, for rank 3
- a combination of four indices from among port indices {0, 1, 2, 3, 8, 9, 10, 11}, for rank 4

Here, the above-described "port indices {0, 1, 2, 3, 8, 9, 10, 11}" and "one of a first set (for example, {0, 1, 2, 3}) and a second set (for example, {8, 9, 10, 11})" may be interchangeably interpreted. The first/second set may be defined in advance in a standard, may be configured for a UE by using higher layer signaling, or may be determined based on a UE capability. Which of the first or second set the index is selected from may be defined in advance in a standard, may be configured for a UE by using higher layer signaling, or may be judged based on a UE capability.

The first embodiment described above enables a UE to appropriately judge a DMRS port to be used.

### <Variation of First Embodiment>

A variation of the first embodiment relates to another antenna port table for DMRS type = enhanced type 1 and maximum DMRS length = 1.

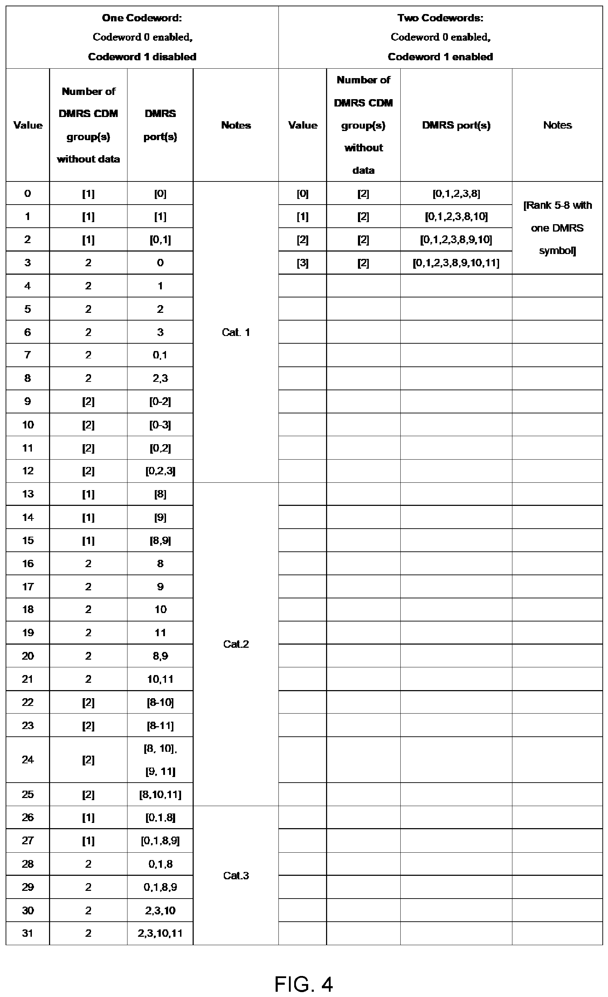

FIG. 4 shows an example of another antenna port table in a case of DMRS type = enhanced type 1 and maximum DMRS length = 1, according to the first embodiment. The table in the example may be used by a UE in a case where the UE receives an activation command (MAC CE) that maps two TCI states to at least one codepoint of a TCI field in DCI. Note that, otherwise, the antenna port table in FIG. 3 may be used.

Although almost the same as FIG. 3, FIG. 4 shows an example where, for one CW, for multi-TRP, row index = 12 (and corresponding row index = 25 for Category 2) is added for indication of DMRS ports of a combination of 1 (for TRP1) + 2 (for TRP2) layers.

Note that rows (row indices 26 to 31) for Category 3 in FIG. 4 may correspond to the antenna port field values = 24 to 29 in FIG. 3.

In FIG. 4, in order to control the number of ranks per TRP more flexibly, a plurality of rows with different DMRS port combinations may be included, for the same number of ranks. For example, assuming a first set (for example, {0, 1, 2, 3}) corresponding to TRP1 and a second set (for example, {8, 9, 10, 11}) corresponding to TRP2, for two CWs and rank 5, the following DMRS port combination may be specified:
- a combination of one index from the first set and four indices from the second set (1 + 4 layers)
- a combination of two indices from the first set and three indices from the second set (2 + 3 layers)
- a combination of three indices from the first set and two indices from the second set (3 + 2 layers)
- a combination of four indices from the first set and one index from the second set (4 + 1 layers)

Note that a Rel-18 DMRS port may be supported only in a case where a UE receives an activation command (MAC CE) that maps two TCI states to at least one codepoint of a TCI field in DCI, otherwise, no Rel-18 DMRS port may be supported. In other words, in a case where the UE receives no activation command (MAC CE) that maps two TCI states to at least one codepoint of a TCI field in DCI, an existing table up to Rel. 17 may be referred to without using the table of FIG. 3.

Reversely, no Rel-18 DMRS port may be supported in a case where a UE receives an activation command (MAC CE) that maps two TCI states to at least one codepoint of a TCI field in DCI, otherwise, a Rel-18 DMRS port may be supported. In other words, in a case where the UE receives the activation command (MAC CE) that maps two TCI states to at least one codepoint of a TCI field in DCI, an existing table up to Rel. 17 may be referred to without using the table of FIG. 4.

The variation of the first embodiment described above enables a UE to appropriately judge a DMRS port to be used.

### <Another Variation of First Embodiment>

Another variation of the first embodiment relates to another example of another antenna port table for DMRS type = enhanced type 1 and maximum DMRS length = 1.

As described above, in order to indicate an antenna port for a single TRP, the 16 rows of entries indicated with entries other than [] in FIG. 3 or 4 are at least required. In this case, an antenna port field included in DCI format 1_1/1_2 is enough to have 4 bits.

In contrast, in order to indicate an antenna port for multi-TRP, in addition to the 16 rows of entries described above, additional entries indicated with [] as described in FIGS. 3 and 4 are required. As described above, antenna port tables may be defined separately for a single TRP and for multi-TRP or may be defined in an integrated manner as one table. In a variation described below, between a case of configuring a single TRP and a case of configuring multi-TRP, a common antenna port table to be applied may be configured in DCI format 1_1/1_2 or separate tables may be configured.

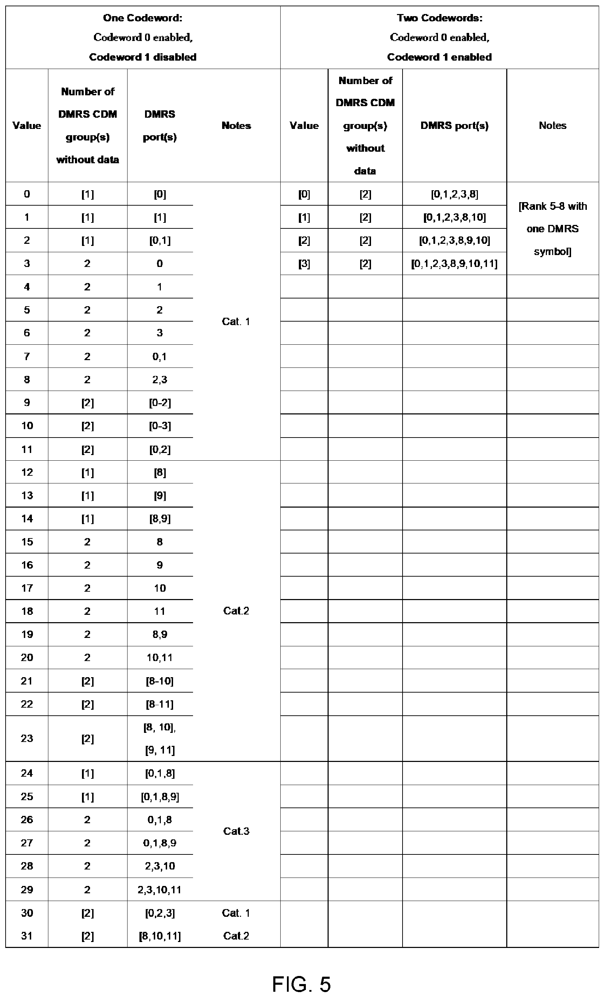

FIG. 5 shows another example of another antenna port table in a case of DMRS type = enhanced type 1 and maximum DMRS length = 1, according to the first embodiment.

Although almost the same as FIG. 3, FIG. 5 shows an example where, for one CW, for multi-TRP, row indices = 30, 31 are added. An entry with Value = 30 of the antenna port field may be associated with the number of DMRS CDM groups without data = 2 and DMRS ports = {0, 2, 3} (Category 1). An entry with Value = 31 of the antenna port field may be associated with the number of DMRS CDM groups without data = 2 and DMRS ports = {8, 10, 11} (Category 2).

As described above, in a case where a single TRP is configured, an antenna port field requires 4 bits. Here, in the DMRS port combination in the case of one CW (the left half of the table in FIG. 5), in order to indicate an antenna port for a single TRP, the 16 rows of entries indicated with row indices = 3 to 8, 15 to 20, and 26 to 29 are at least required. In the DMRS port combination in the case of two CWs (the right half of the table in FIG. 5), in order to indicate an antenna port for a single TRP, the 4 rows of entries indicated with row indices = 0 to 3 are required.

In a case where multi-TRP is configured, an antenna port field requires 5 bits. Here, in the DMRS port combination in the case of one CW (the left half of the table in FIG. 5), in order to indicate an antenna port for multi-TRP, in addition to the 16 rows for a single TRP, at least one row entry out of row indices = 0 to 2, 9 to 14, 21 to 25, and 30 to 31 shown in FIG. 5 (entries indicated with []) may be added. More specifically, it is preferable that row entries of at least row indices = 9, 10, 30 be included. With the entries, it is useful in a case of applying MU-MIMO.

In the DMRS port combination in the case of multi-TRP configured and of two CWs (the right half of the table in FIG. 5), in order to indicate an antenna port for multi-TRP, the 4 rows for a single TRP are sufficient and another row entry may be further added. Such a row entry to be added may include at least one of rows indicating the following DMRS port combinations:
- a combination of one index selected from among port indices {0, 1, 8, 9} in CDM group #0 and four indices selected from among port indices {2, 3, 10, 11} in CDM group #1, for rank 5
- a combination of two indices selected from among port indices {0, 1, 8, 9} in CDM group #0 and three indices selected from among port indices {2, 3, 10, 11} in CDM group #1, for rank 5
- a combination of three indices selected from among port indices {0, 1, 8, 9} in CDM group #0 and two indices selected from among port indices {2, 3, 10, 11} in CDM group #1, for rank 5
- a combination of four indices selected from among port indices {0, 1, 8, 9} in CDM group #0 and one index selected from among port indices {2, 3, 10, 11} in CDM group #1, for rank 5
- a combination of two indices selected from among port indices {0, 1, 8, 9} in CDM group #0 and four indices selected from among port indices {2, 3, 10, 11} in CDM group #1, for rank 6
- a combination of three indices selected from among port indices {0, 1, 8, 9} in CDM group #0 and three indices selected from among port indices {2, 3, 10, 11} in CDM group #1, for rank 6
- a combination of four indices selected from among port indices {0, 1, 8, 9} in CDM group #0 and two indices selected from among port indices {2, 3, 10, 11} in CDM group #1, for rank 6
- a combination of three indices selected from among port indices {0, 1, 8, 9} in CDM group #0 and four indices selected from among port indices {2, 3, 10, 11} in CDM group #1, for rank 7
- a combination of four indices selected from among port indices {0, 1, 8, 9} in CDM group #0 and three indices selected from among port indices {2, 3, 10, 11} in CDM group #1, for rank 7
- a combination of four indices selected from among port indices {0, 1, 8, 9} in CDM group #0 and four indices selected from among port indices {2, 3, 10, 11} in CDM group #1, rank 8

Note that all the entries indicating the combinations described above are preferable to be associated with the number of DMRS CDM groups without data = 2.

Such another variation of the first embodiment described above enables a UE to appropriately judge a DMRS port to be used.

### <Another Aspect of First Embodiment>

Another aspect of the first embodiment relates to a limitation prescription (restriction) for MU-MIMO.

For example, in Rel. 15, with respect to scheduling for MU-MIMO, a limitation prescription (restriction) as below is provided.

For example, in a case of DMRS type = type 1/type 2, when a UE is scheduled with one CW and assigned with antenna port mapping with a specific index in an existing antenna port table or when the UE is scheduled with two CWs, the UE may assume that the remaining orthogonal antenna ports are not associated with transmission of a PDSCH to another UE.

In a case of the enhanced type described above, how to define a restriction for MU-MIMO is not clear.

In view of this, application of a restriction for MU-MIMO to the enhanced type described above is studied. Hereinafter, the limitation prescription for MU-MIMO will be described taking the above-described antenna port table of FIG. 5 as an example. Note that, not limited to FIG. 5, the restriction may be applied to FIGS. 3 and 4 and another antenna port table.

In the present disclosure, the restriction for MU-MIMO may be interpreted as an MU-MIMO operation being limited.

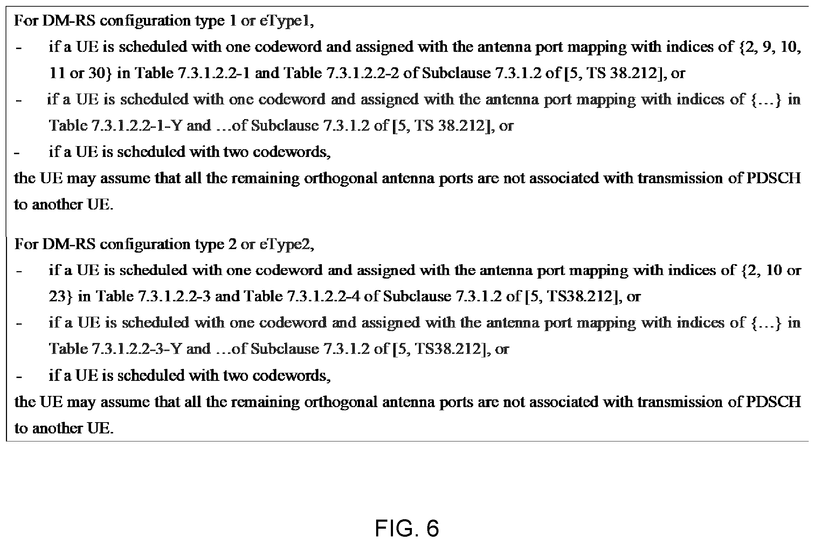

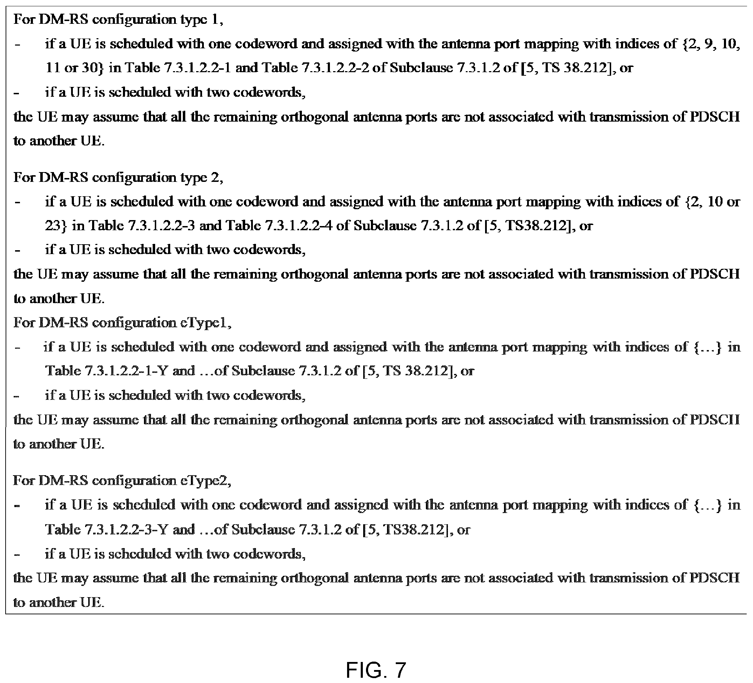

FIGS. 6 and 7 each show an example of the limitation prescription for MU-MIMO according to another aspect of the first embodiment. As shown in FIGS. 6 and 7, for two CWs, no MU-MIMO operation may be applied (an MU-MIMO operation may be limited). Even in the case of two CWs, an MU-MIMO operation may be applied (no MU-MIMO operation may be limited).

For example, in a case of DMRS type = enhanced type 1/enhanced type 2, when a UE is scheduled with one CW and assigned with antenna port mapping with a specific index in a new antenna port table, the UE may assume that the remaining orthogonal antenna ports are not associated with transmission of a PDSCH to another UE. Here, the specific index in the new antenna port table may correspond to entries of row indices indicated in Conditions 1 to 3 to be described below. In other words, based on a certain condition, the assuming by the UE described above may be interpreted as a restriction for MU-MIMO.

In the new antenna port table shown in FIG. 5 described above, a restriction for MU-MIMO may be defined. In other words, in a case where at least one of the conditions described below is met (a case where a specific row entry is selected/indicated), that is, a case where a UE is assigned with antenna port mapping with a specific index in the new antenna port table, the UE may assume that the remaining orthogonal antenna ports are not associated with transmission of a PDSCH to another UE.

The restriction may be applied to a UE configured with all the DMRS ports in Rel. 18. The UE may report capability information on whether (part of) the restriction is required. When part of the restriction is configured by using a higher layer, the UE may apply the restriction.

### <Condition 1>

In a case where row indices = 2, 9 to 11 are specified, the UE may apply the restriction described above in a manner similar to a restriction based on any existing antenna port table. Note that, for the row indices, in a case where Rel-18 DMRS ports are configured, a restriction for row index = 2 may be released. For example, in an existing system (Rel. 15), in a case of the number of DMRS CDM groups without data = 1, multiplexing for a plurality of UEs is physically not possible. In Rel. 18, however, UE #1 specified with DMRS ports = {0, 1} and UE #2 specified with DMRS ports = {8, 9} may be able to be multiplexed.

In a case where Rel-18 DMRS ports are configured, for the UE, a restriction for row indices = 9, 10, 11 may or may not be released. For example, for the UE applied with the restriction for row indices = 9 to 11, none of row indices = 21 to 23 may be (able to be) indicated. In other words, for the UE applied with the restriction for row indices = 9, 10, 11, row indices = 21 to 23 may be excluded, in the antenna port table.

Note that the UE applied with the restriction for row indices = 9 to 11 may not need to assume that row indices = 21 to 23 are indicated to another UE. In other words, the UE may be indicated with only either row indices = 9 to 11 or row indices = 21 to 23. In this case, the other row indices to 11, may be excluded from the antenna port table.

### <Condition 2>

In a case where row indices = 14, 21 to 23 are specified, the UE may apply the restriction described above in a manner similar to a restriction based on any existing antenna port table. Note that, for the row indices, in a case where Rel-18 DMRS ports are configured, a restriction for row indices = 2, 14 may be released. For example, in an existing system (Rel. 15), in a case of the number of DMRS CDM groups without data = 1, multiplexing for a plurality of UEs is physically not possible. In Rel. 18, however, UE #1 specified with DMRS ports = {0, 1} and UE #2 specified with DMRS ports = {8, 9} may be able to be multiplexed.

In a case where Rel-18 DMRS ports are configured, for the UE, a restriction for row indices = 21 to 23 may or may not be released. For example, for the UE applied with the restriction for row indices = 9, 10, 11, none of row indices = 21 to 23 may be (able to be) indicated. In other words, for the UE applied with the restriction for row indices = 9, 10, 11, row indices = 21 to 23 may be excluded, in the antenna port table.

Furthermore, it may be reported, by using capability information, that a UE indicated with row indices = 9 to 11 and a UE indicated with row indices = 21 to 23 support multiplexing by MU-MIMO. Only a UE having reported such a capability (supporting of multiplexing by MU-MIMO) may be able to apply an MU-MIMO operation.

### <Condition 3>

In a case where row indices = 24 to 29 corresponding to Category 3 are specified, the UE may apply the restriction described above. The UE having reported the capability information described above need not apply the restriction described above. Under this condition, three ports/four ports in one CDM group are already used. Thus, further adding one port for another UE is considered to have few benefit. On the other hand, for a more capable UE, one port is added to be able to be indicated so that cell capacity can be improved.

### <Reporting of UE Capability>

A UE may report that a restriction for MU-MIMO is supported. A UE may report, as capability information, a combination of DMRS ports possible/impossible for an MU-MIMO operation. A UE may report, as capability information, an upper limit (maximum number) for a total number of antenna ports for all the UEs to be multiplexed in the same CDM group/all CDM groups. In this case, the UE need not assume that more combinations of DMRS ports than the maximum number for reporting are indicated.

Such another aspect of the first embodiment described above enables a UE to appropriately control application of an MU-MIMO operation.

### <Second Embodiment>

A second embodiment relates to an antenna port table for DMRS type = enhanced type 1 and maximum DMRS length = 2.

For the second embodiment, description is omitted on details that may be the same as that in the first embodiment (or that may be, for example, controlled/configured/adjusted similarly to the first embodiment).

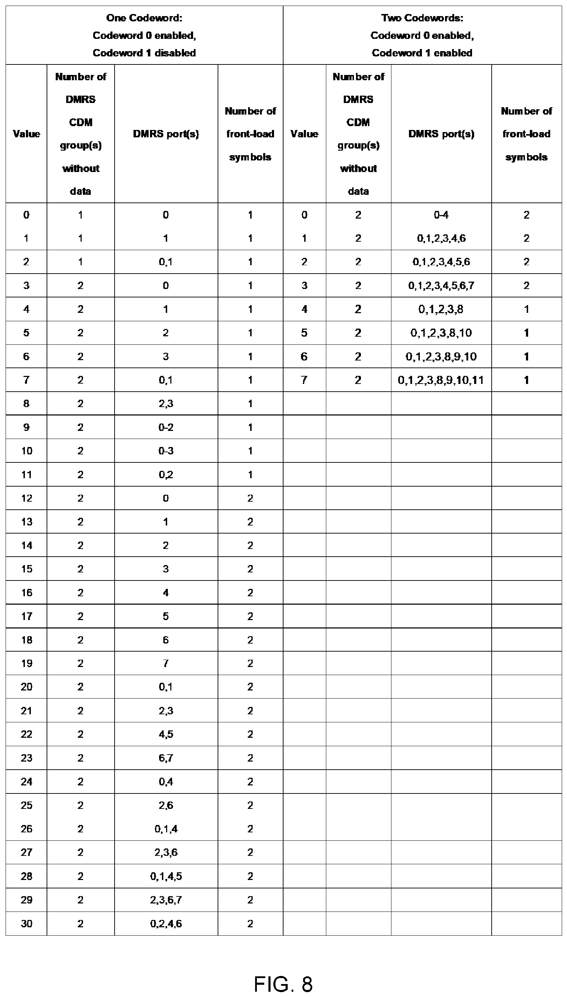

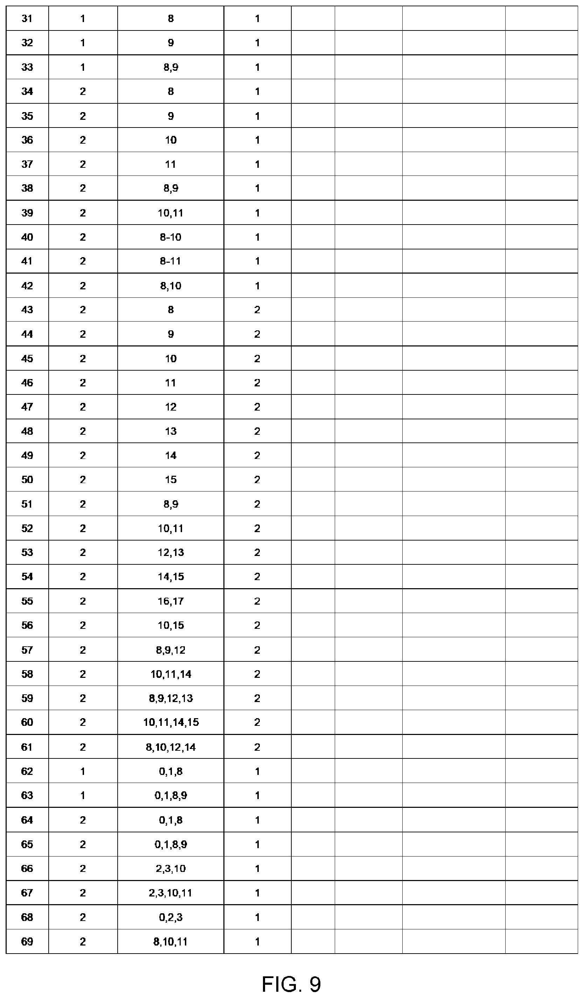

FIGS. 8 and 9 show an example of a table to be a base of an antenna port table in a case of DMRS type = enhanced type 1 and maximum DMRS length = 2, according to the second embodiment. Note that the antenna port table according to the second embodiment described below is shown across two figures, FIGS. 8 and 9, due to the number of rows. In other words, in FIGS. 8 and 9, one table is defined with the two figures integrated. More specifically, description will be made assuming that the lowest row (row index = 30) in FIG. 8 is, immediately thereafter, followed by the highest row (row index = 31) in FIG. 9. As described above, the table shown in FIGS. 8 and 9 is only an example, and thus divided tables may be defined depending on a scenario to be applied (single TRP/multi-TRP, or any of Categories 1 to 3).

Firstly, row entries for one CW (the left half of FIGS. 8 and 9) are described. In the antenna port table shown in this example, row indices = 0 to 11 for one CW may correspond to row indices = 0 to 11 in FIG. 3.

Row indices = 0 to 30, 31 to 61, and 62 to 67 (69) may respectively correspond to Category 1, Category 2, and Category 3. Note that, in Category 3, in a case of up to 4 ranks, only one CDM group may be used per UE.

Entries indicated with [] in FIG. 3 may indicate entries corresponding to row indices below of the example. The entries indicated with [] may each indicate an antenna port corresponding to multi-TRP / a DMRS port across a CDM group.

Row indices = 0 to 2 in FIG. 3 may correspond to row indices = 0 to 2 in the example. Row indices = 12 to 14 in FIG. 3 may correspond to row indices = 31 to 33 in the example. Row indices = 24 to 25 in FIG. 3 may correspond to row indices = 62 to 63 in the example.

Row indices = 9 to 10 in FIG. 3 may correspond to row indices = 9 to 10 in the example. Row indices = 21 to 22 in FIG. 3 may correspond to row indices = 40 to 41 in the example.

Row index = 11 in FIG. 3 may correspond to row index = 11 in the example. Row index = 23 in FIG. 3 may correspond to row index = 30/61 in the example.

Entries of row indices = 12 to 30 (corresponding to FIG. 8) and 43 to 61 (corresponding to FIG. 9) in the example are row entries newly added. In other words, the entries of row indices = 12 to 30 and 43 to 61 indicate a case that the number of front-load symbols is two. For the other row indices, the number of front-load symbols may be one.

Entries of row indices = 30, 31 in FIG. 5 may be added as entries of row indices = 68, 69 in the example. Such entries may not necessarily need to be added.

Row indices = 55 to 60 in the example may be associated with the number of DMRS CDM groups without data = 2 and the number of front-load symbols = 2. With these row entries, a plurality of DMRS ports may be indicated, by using a DMRS having a length of 2 in the same CDM group. The entries are possible to be indicated with row entries of Category 3 (for example, entries of row indices = 62 to 67) substitutively, and thus may not necessarily need to be provided. The restriction for MU-MIMO described above may or may not be applied.

For example, in a case where row index = 11 is indicated in an existing specification, MU-MIMO is not applied, and thus row index = 42 may be excluded (deleted). Similarly, in a case where row index = 30 is indicated in an existing specification, MU-MIMO is not applied, and thus row index = 61 may be excluded (deleted).

Next, row entries for two CWs (the right half of FIG. 8) are described. Row indices = 0 to 3 in FIG. 3 may correspond to row indices = 4 to 7 in the example. Row indices = 0 to 3 in the example are row entries newly added. In other words, the entries of row indices = 0 to 3 indicate a case that the number of front-load symbols is two.

As described above, for two CWs, the combinations in FIG. 3 described above may be again used. For two CWs, supporting Category 3 allows ranks 1 to 8 to be indicated with one symbol even in a case of maximum DMRS length = 2. As a result, it is possible to improve throughput of a UE.

For two CWs, in a case where multiplexing for MU-MIMO is impossible, row indices = 0 to 3 may be deleted from the table. In contrast, for two CWs, in a case where multiplexing for MU-MIMO is possible, row indices = 0 to 3 may be left in the table. In this case, a UE of two CWs indicated with row indices = 0 to 3 and another UE of one CW orthogonal to the UE may be multiplexed in the same CDM group.

UE #1 of two CWs and UE #2 of two CWs may be able to be multiplexed in the same CDM group. In this case, a combination indicating ranks 5 to 8 that UE #1 and UE #2 are orthogonal to each other may be defined in the side of two CWs (the right half of the table).

In the antenna port table of the second embodiment, at least one of the rows (entries) included in the tables of FIGS. 3 to 5 may be included (may be left) as a DMRS port combination including only category-1 DMRS ports.

In the antenna port table of the second embodiment, a DMRS port combination including only category-2 DMRS ports may be included. Such a combination may correspond to a DMRS port combination obtained by making every index + X (for example, + 8), from at least one of DMRS port combinations including only DMRS ports of Category 1 described above, for example.

In the antenna port table of the second embodiment, a DMRS port combination including category-3 DMRS ports may be included. Note that rows for category-3 DMRS ports may be limited only to rows that the number of front-load symbols includes a specific number (for example, one or two).

Note that the above description regarding the antenna port table of the second embodiment may be applied to the left half (for one CW) of FIGS. 3 to 5, the right half (for two CWs), or both.

The second embodiment described above enables a UE to appropriately judge a DMRS port to be used.

### <Another Aspect of Second Embodiment>

Another aspect of the second embodiment relates to a limitation prescription (restriction) for MU-MIMO.

For such another aspect of the second embodiment, description is omitted on details that may be the same as that in another aspect of the first embodiment (or that may be, for example, controlled/configured/adjusted similarly to such another aspect of the first embodiment).

In other words, in the new antenna port table shown in FIGS. 8 and 9, a restriction for MU-MIMO may be defined. In other words, in a case where at least one of the conditions described below is met (a case where a specific row entry is selected/indicated), that is, a case where a UE is assigned with antenna port mapping with a specific index in the new antenna port table, the UE may assume that the remaining orthogonal antenna ports are not associated with transmission of a PDSCH to another UE.

### <Condition 1>

In a case where row indices = 2, 9 to 11, 30 are specified, the UE may apply the restriction described above in a manner similar to a restriction based on any existing antenna port table. Note that, for the row indices, in a case where Rel-18 DMRS ports are configured, a restriction for row index = 2 may be released. For example, in an existing system (Rel. 15), in a case of the number of DMRS CDM groups without data = 1, multiplexing for a plurality of UEs is physically not possible. In Rel. 18, however, UE #1 specified with DMRS ports = {0, 1} and UE #2 specified with DMRS ports = {8, 9} may be able to be multiplexed.

In a case where Rel-18 DMRS ports are configured, for the UE, a restriction for row indices = 9, 10, 11 may or may not be released. For example, for the UE applied with the restriction for row indices = 9 to 11, none of row indices = 31 to 33 may be (able to be) indicated. In other words, for the UE applied with the restriction for row indices = 9, 10, 11, row indices = 31 to 33 may be excluded, in the antenna port table.

Note that the UE applied with the restriction for row indices = 9 to 11 may not need to assume that row indices = 31 to 33 are indicated to another UE. In other words, the UE may be indicated with only either row indices = 9 to 11 or row indices = 31 to 33. In this case, the other row indices may be excluded from the antenna port table.

### <Condition 2>

In a case where row indices = 40 to 42 are specified, the UE may apply the restriction described above in a manner similar to a restriction based on any existing antenna port table. Note that, for the row indices, in a case where Rel-18 DMRS ports are configured, a restriction for row indices = 2, 33 may be released. For example, in an existing system (Rel. 15), in a case of the number of DMRS CDM groups without data = 1, multiplexing for a plurality of UEs is physically not possible. In Rel. 18, however, UE #1 specified with DMRS ports = {0, 1} and UE #2 specified with DMRS ports = {8, 9} may be able to be multiplexed.

In a case where Rel-18 DMRS ports are configured, for the UE, a restriction for row indices = 40 to 42 may or may not be released. For example, for the UE applied with the restriction for row indices = 9, 10, 11, none of row indices = 40 to 42 may be (able to be) indicated. In other words, for the UE applied with the restriction for row indices = 9, 10, 11, row indices = 40 to 42 may be excluded, in the antenna port table.

Furthermore, it may be reported, by using capability information, that a UE indicated with row indices = 9 to 11 and a UE indicated with row indices = 40 to 42 support multiplexing by MU-MIMO. Only a UE having reported such a capability (supporting of multiplexing by MU-MIMO) may be able to apply an MU-MIMO operation.

### <Condition 3>

In a case where row indices = 62 to 67 corresponding to Category 3 are specified, the UE may apply the restriction described above. The UE having reported the capability information described above need not apply the restriction described above. Under this condition, three ports/four ports in one CDM group are already used. Thus, further adding one port for another UE is considered to have few benefit. On the other hand, for a more capable UE, one port is added to be able to be indicated so that cell capacity can be improved.

Such another aspect of the second embodiment described above enables a UE to appropriately control application of an MU-MIMO operation.

### <Third Embodiment>

A third embodiment relates to an antenna port table for DMRS type = enhanced type 2 and maximum DMRS length = 1.

For the third embodiment, description is omitted on details that may be the same as that in the first/second embodiment (or that may be, for example, controlled/configured/adjusted similarly to the first/second embodiment). Note that, in the antenna port table according to the third embodiment (including a variation to be described below), an index difference between a category-1 DMRS port and a category-2 DMRS port may be, for example, + 12 and the possible number of CDM groups without data may include one to three. In other words, the offset indicator of Category 2 with respect to Category 1 may be + 12.

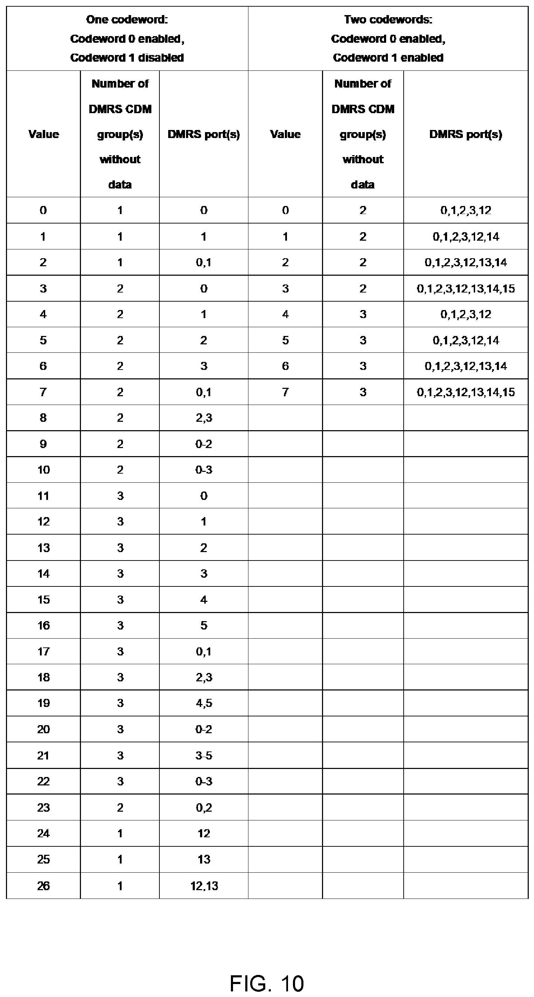

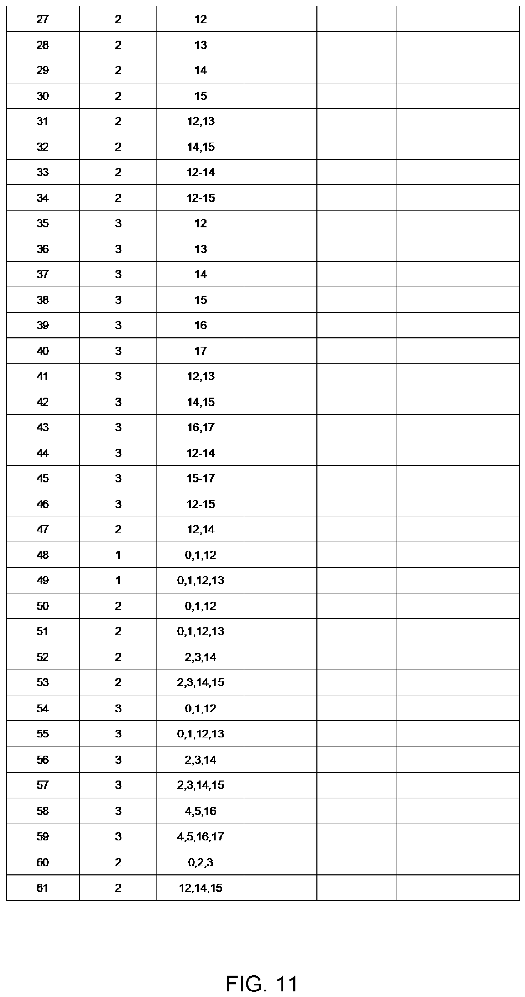

FIGS. 10 and 11 show an example of a table to be a base of an antenna port table in a case of DMRS type = enhanced type 2 and maximum DMRS length = 1, according to the third embodiment. Note that the antenna port table according to the third embodiment described below is shown across two figures, FIGS. 10 and 11, due to the number of rows. In other words, in FIGS. 10 and 11, one table is defined with the two figures integrated. More specifically, description will be made assuming that the lowest row (row index = 26) in FIG. 10 is, immediately thereafter, followed by the highest row (row index = 27) in FIG. 11. As described above, the table shown in FIGS. 10 and 11 is only an example, and thus divided tables may be defined depending on a scenario to be applied (single TRP/multi-TRP, or any of Categories 1 to 3).

Firstly, row entries for one CW (the left half of FIGS. 10 and 11) are described. In the antenna port table shown in this example, row indices = 0 to 10 for one CW may correspond to row indices = 0 to 10 in FIG. 3.

Row indices = 0 to 23, 24 to 47, and 48 to 59 (61) may respectively correspond to Category 1, Category 2, and Category **3.** Note that, in Category 3, all the combinations for the number of DMRS CDM groups without data = 1 to 3 may be covered or part of the combinations may be omitted. For example, in a case of the number of DMRS CDM groups without data = 1, DMRS port combinations for one CDM group may be defined. In a case of the number of DMRS CDM groups without data = 2, DMRS port combinations for two CDM groups may be defined. In a case of the number of DMRS CDM groups without data = 3, DMRS port combinations for three CDM groups may be defined.

Entries indicated with [] in FIG. 3 may indicate entries corresponding to row indices below of the example. The entries indicated with [] may each indicate an antenna port corresponding to multi-TRP / a DMRS port across a CDM group.

Row indices = 0 to 2 in FIG. 3 may correspond to row indices = 0 to 2 in the example. Row indices = 12 to 14 in FIG. 3 may correspond to row indices = 24 to 26 in the example. Row indices = 24 to 25 in FIG. 3 may correspond to row indices = 48 to 49 in the example.

Row indices = 9 to 10 in FIG. 3 may correspond to row indices = 9 to 10 in the example. Row indices = 21 to 22 in FIG. 3 may correspond to row indices = 33 to 34 in the example.

Row index = 11 in FIG. 3 may correspond to row index = 23 in the example. Row index = 23 in FIG. 3 may correspond to row index = 47 in the example.

Entries of row indices = 11 to 22 (corresponding to FIG. 10) and 35 to 46 (corresponding to FIG. 11) in the example are row entries newly added. In other words, the entries of row indices = 11 to 22 and 35 to 46 indicate a case of the number of DMRS CDM groups without data = 3. For the other row indices, the number of DMRS CDM groups without data = 1/2 may be provided.

For example, in a case where row index = 23 is indicated in an existing specification, MU-MIMO is not applied, and thus row index = 47 may be excluded (deleted).

Next, row entries for two CWs (the right half of FIG. 10) are described. Row indices = 0 to 3 in the example may each indicate the number of DMRS CDM groups without data = 2 and may be associated with ranks 5 to 8. Row indices = 4 to 7 in the example may each indicate the number of DMRS CDM groups without data = 3 and may be associated with ranks 5 to 8.

Only either row indices = 0 to 3 or 4 to 7 may be defined or both may be defined. For example, in a case of row indices = 0 to 3, the number of DMRS CDM groups without data = 2 enables one CDM group to be FDMed with data by using MU-MIMO, allowing improvement in throughput of a UE. In contrast, in a case of row indices = 4 to 7, the number of DMRS CDM groups without data = 3 enables one CDM group to be assigned to another UE, allowing improvement in cell capacity.

In the antenna port table of the third embodiment, a DMRS port combination including only category-2 DMRS ports may be included. Such a combination may correspond to a DMRS port combination obtained by making every index + X (for example, + 12), from at least one of DMRS port combinations including only category-1 DMRS ports described above, for example.

In the antenna port table of the third embodiment, a DMRS port combination including category-3 DMRS ports may be included. Note that rows for category-3 DMRS ports may be limited only to rows that the number of front-load symbols includes a specific number (for example, one or two).

In the antenna port table of the third embodiment, for two CWs, rows indicating the following DMRS port combination may be included:
- a combination of five indices from among port indices {0, 1, 2, 3, 4, 5, 12, 13, 14, 15, 16, 17}, for rank 5
- a combination of six indices from among port indices {0, 1, 2, 3, 4, 5, 12, 13, 14, 15, 16, 17}, for rank 6
- a combination of seven indices from among port indices {0, 1, 2, 3, 4, 5, 12, 13, 14, 15, 16, 17}, for rank 7
- a combination of eight indices from among port indices {0, 1, 2, 3, 4, 5, 12, 13, 14, 15, 16, 17}, for rank 8

Here, the above-described "port indices {0, 1, 2, 3, 4, 5, 12, 13, 14, 15, 16, 17}" and "two of a first set (for example, {0, 1, 12, 13}), a second set (for example, {2, 3, 14, 15}), and a third set (for example, {4, 5, 16, 17})" may be interchangeably interpreted. The first/second/third set may be defined in advance in a standard, may be configured for a UE by using higher layer signaling, or may be determined based on a UE capability. Which two of the first to third sets the index is selected from may be defined in advance in a standard, may be configured for a UE by using higher layer signaling, or may be judged based on a UE capability.

The DMRS port combination in the case of one CW (the left half of the table) in the third embodiment may include a combination other than the above-described example and, for ranks, at least one combination of the following may be defined:
- a combination of one index from among port indices {0, 1, 2, 3, 4, 5, 12, 13, 14, 15, 16, 17}, for rank 1
- a combination of two indices from among port indices {0, 1, 2, 3, 4, 5, 12, 13, 14, 15, 16, 17}, for rank 2
- a combination of three indices from among port indices {0, 1, 2, 3, 4, 5, 12, 13, 14, 15, 16, 17}, for rank 3
- a combination of four indices from among port indices {0, 1, 2, 3, 4, 5, 12, 13, 14, 15, 16, 17}, for rank 4

Here, the above-described "port indices {0, 1, 2, 3, 4, 5, 12, 13, 14, 15, 16, 17}" and "any of a first set (for example, {0, 1, 12, 13}), a second set (for example, {2, 3, 14, 15}), and a third set (for example, {4, 5, 16, 17})" may be interchangeably interpreted. The first/second/third set may be defined in advance in a standard, may be configured for a UE by using higher layer signaling, or may be determined based on a UE capability. Which of the first to third sets the index is selected from may be defined in advance in a standard, may be configured for a UE by using higher layer signaling, or may be judged based on a UE capability.

In a specific DMRS port combination in the antenna port table according to the third embodiment, for the number of DMRS CDM groups without data, at least one of one, two, and three may be defined (for example, separate rows corresponding to different numbers of DMRS CDM groups may be defined).

The third embodiment described above enables a UE to appropriately judge a DMRS port to be used.

### <Another Aspect of Third Embodiment>

Another aspect of the third embodiment relates to a limitation prescription (restriction) for MU-MIMO.

For such another aspect of the third embodiment, description is omitted on details that may be the same as that in another aspect of the first/second embodiment (or that may be, for example, controlled/configured/adjusted similarly to such another aspect of the first/second embodiment).

In other words, in the new antenna port table shown in FIGS. 10 and 11, a restriction for MU-MIMO may be defined. For example, in a case where a certain condition is met (a case where a specific row entry is selected/indicated), that is, a case where a UE is assigned with antenna port mapping with a specific index in the new antenna port table, the UE may assume that the remaining orthogonal antenna ports are not associated with transmission of a PDSCH to another UE.

For example, similarly to any existing specification, for Rel-18 enhanced type 2, in a case where row indices = 2, 10, 23 are indicated, a UE may apply a restriction for MU-MIMO. Even when row indices = 2, 10 are indicated, orthogonal DMRS ports may be assigned to another UE.

Such another aspect of the third embodiment described above enables a UE to appropriately control application of an MU-MIMO operation.

### <Fourth Embodiment>

A fourth embodiment relates to an antenna port table for DMRS type = enhanced type 2 and maximum DMRS length = 2.

For the fourth embodiment, description is omitted on details that may be the same as that in the first to third embodiments (or that may be, for example, controlled/configured/adjusted similarly to the first to third embodiments).

In the antenna port table of the fourth embodiment, a DMRS port combination including only category-2 DMRS ports may be included. Such a combination may correspond to a DMRS port combination obtained by making every index + X (for example, + 12), from at least one of DMRS port combinations including only category-1 DMRS ports described above, for example.

In the antenna port table of the fourth embodiment, a DMRS port combination including category-3 DMRS ports may be included. Note that rows for category-3 DMRS ports may be limited only to rows that the number of front-load symbols includes a specific number (for example, one or two).

Note that the above description regarding the antenna port table of the fourth embodiment may be applied to a case of one CW, a case of two CWs, or both.

For example, in a case of ranks 3 to 4, a DMRS port may be indicated across two CDM groups. Furthermore, similarly to the embodiments described above, different row indices may be defined depending on a single TRP/multi-TRP.

Existing entries of Category 1 may be left / part of them may be omitted. For Category 2/3, a new DMRS port combination may be defined/added.

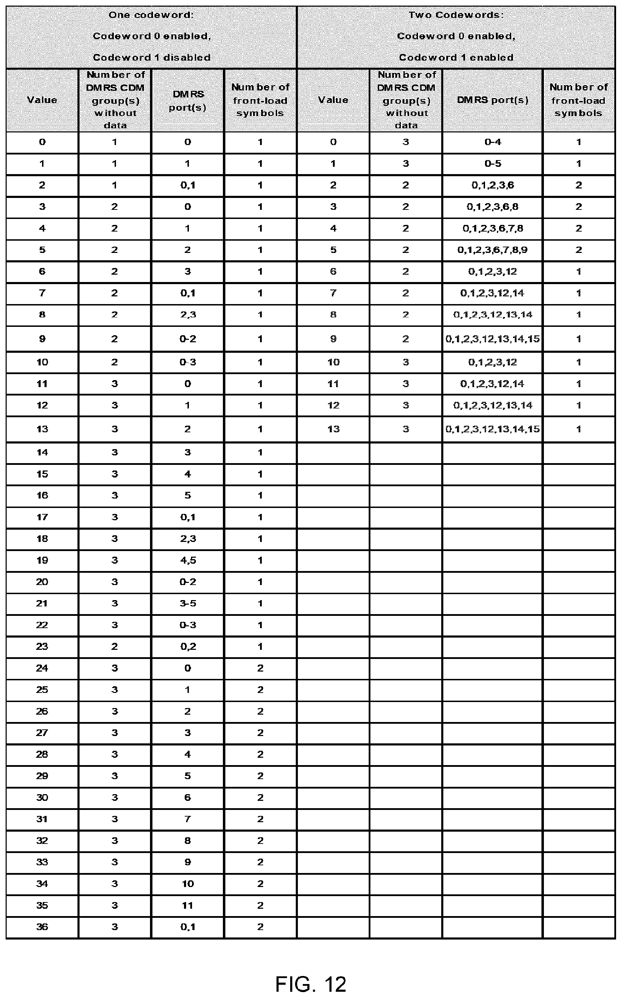

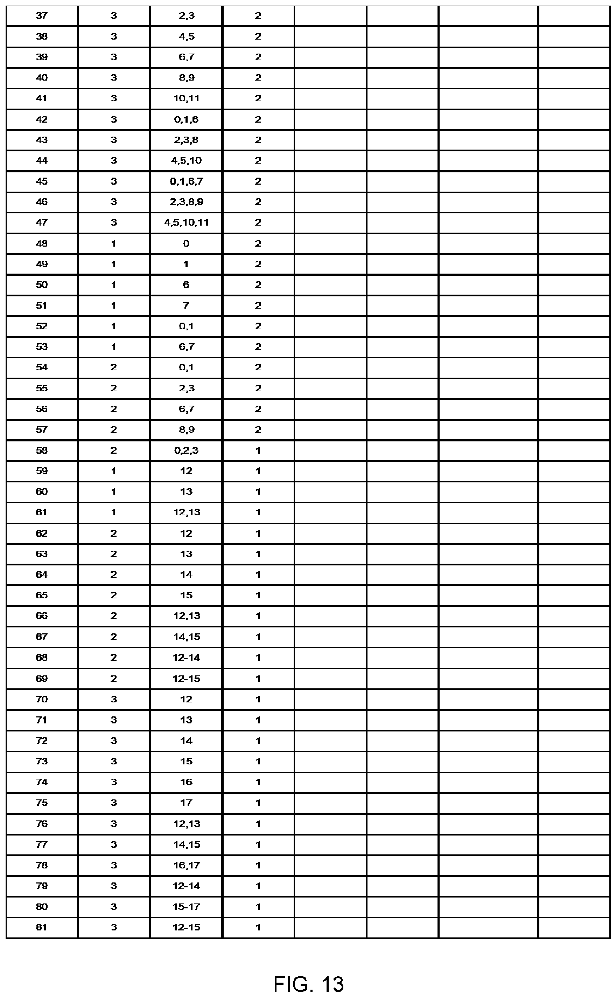

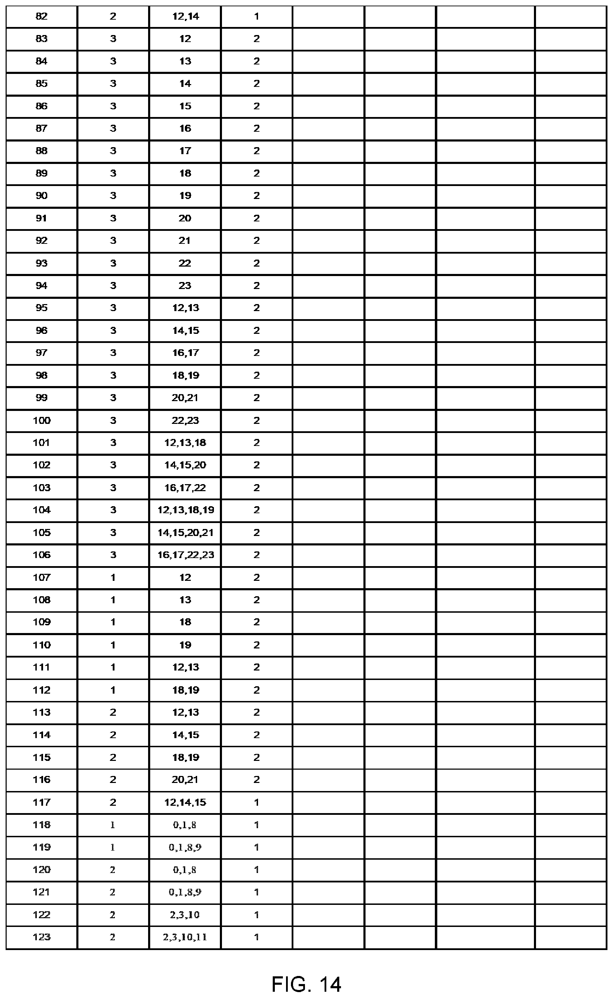

FIGS. 12 to 14 show an example of a table to be a base of an antenna port table in a case of DMRS type = enhanced type 2 and maximum DMRS length = 2, according to the fourth embodiment. Note that the antenna port table according to the fourth embodiment described below is shown across FIGS. 12 to 14 due to the number of rows. In other words, in FIGS. 12 to 14, one table is defined with the three figures integrated. More specifically, description will be made assuming that the lowest row (row index = 36) in FIG. 12 is, immediately thereafter, followed by the highest row (row index = 37) in FIG. 13 and the lowest row (row index = 81) in FIG. 13 is, immediately thereafter, followed by the highest row (row index = 82) in FIG. 14. As described above, the table shown in FIGS. 12 to 14 is only an example, and thus divided tables may be defined depending on a scenario to be applied (single TRP/multi-TRP, or any of Categories 1 to 3).

Firstly, row entries for one CW (the left half of FIGS. 12 to 14) are described. In the antenna port table shown in this example, row indices = 0 to 10 for one CW may correspond to row indices = 0 to 10 in FIG. 3.

Row indices = 0 to 58, 59 to 117, and 118 to 123 may respectively correspond to Category 1, Category 2, and Category 3. Note that, in Category 3, all the combinations for the number of DMRS CDM groups without data = 1 to 3 may be covered or part of the combinations may be omitted. For example, in a case of the number of DMRS CDM groups without data = 1, DMRS port combinations for one CDM group may be defined. In a case of the number of DMRS CDM groups without data = 2, DMRS port combinations for two CDM groups may be defined. In a case of the number of DMRS CDM groups without data = 3, DMRS port combinations for three CDM groups may be defined.

Entries indicated with [] in FIG. 3 may indicate entries corresponding to row indices below of the example. The entries indicated with [] may each indicate an antenna port corresponding to multi-TRP / a DMRS port across a CDM group,

Row indices = 0 to 2 in FIG. 3 may correspond to row indices = 0 to 2 in the example. Row indices = 12 to 14 in FIG. 3 may correspond to row indices = 59 to 61 in the example. Row indices = 24 to 25 in FIG. 3 may correspond to row indices = 118 to 119 in the example.

Row indices = 9 to 10 in FIG. 3 may correspond to row indices = 9 to 10 in the example. Row indices = 21 to 22 in FIG. 3 may correspond to row indices = 68 to 69 in the example.

For example, as an extended example of the antenna port table of this example, row indices = 58, 117 may be excluded (deleted).

Next, row entries for two CWs (the right half of FIG. 12) are described. Row indices = 0 to 1 and 10 to 13 in the example may each indicate the number of DMRS CDM groups without data = 3 and may be associated with ranks 5 to 8. Row indices = 2 to 9 in the example may each indicate the number of DMRS CDM groups without data = 2 and may be associated with ranks 5 to 8. Row indices = 2 to 5 may each indicate a case where the number of front load symbols is two, and the other row indices may indicate a case where the number of front-load symbols is one.

Only either row indices for the number of DMRS CDM groups without data = 2 or row indices for the number of DMRS CDM groups without data = 3 may be defined or both may be defined. For example, the number of DMRS CDM groups without data = 2 enables one CDM group to be FDMed with data by using MU-MIMO, allowing improvement in throughput of a UE. In contrast, the number of DMRS CDM groups without data = 3 enables one CDM group to be assigned to another UE, allowing improvement in cell capacity.

In the antenna port table of the fourth embodiment, a DMRS port combination including only category-2 DMRS ports may be included. Such a combination may correspond to a DMRS port combination obtained by making every index + X (for example, + 12), from at least one of DMRS port combinations including only category-1 DMRS ports described above, for example.

In the antenna port table of the fourth embodiment, a DMRS port combination including category-3 DMRS ports may be included. Note that rows for category-3 DMRS ports may be limited only to rows that the number of front-load symbols includes a specific number (for example, one or two).

The fourth embodiment described above enables a UE to appropriately judge a DMRS port to be used.

### <Another Aspect of Fourth Embodiment>

Another aspect of the fourth embodiment relates to a limitation prescription (restriction) for MU-MIMO.

For such another aspect of the fourth embodiment, description is omitted on details that may be the same as that in another aspect of the first to third embodiments (or that may be, for example, controlled/configured/adjusted similarly to such another aspect of the first to third embodiments).

In the new antenna port table shown in the fourth embodiment, a restriction for MU-MIMO may be defined. For example, in a case where a certain condition is met (a case where a specific row entry is selected/indicated), that is, a case where a UE is assigned with antenna port mapping with a specific index in the new antenna port table, the UE may assume that the remaining orthogonal antenna ports are not associated with transmission of a PDSCH to another UE.

Such another aspect of the fourth embodiment described above enables a UE to appropriately control application of an MU-MIMO operation.

### <Variations of Embodiments>

In the embodiments described above, a size of an antenna port field of DCI may be determined based on the number of rows of an antenna port table to be referred to (for example, 5 bits in a case of 32 rows of values).

The size of the antenna port field of the DCI may be a specific number of bits (for example, 3 bits, 4 bits). The specific number of bits may be configured by using a certain rule or higher layer signaling. In this case, as the antenna port table, a table may be used that one or more combinations of DMRS ports are selected from an antenna port table of an embodiment below, based on RRC configuration or predetermined rule. For example, 16 rows selected based on a certain rule or higher layer signaling, out of rows (entries) of 32 rows, may be indicated by using an antenna port field of 4 bits.

In a case of two CWs, a size of an antenna port field may be smaller than that of a case of one CW (because, for example, the number of combinations to exist is different between a case of selecting one from eight and a case of selecting eight from eight). Thus, the size of the antenna port field may be different between a case where one CW is specified/configured and a case where two CWs are specified/configured. Between the case where one CW is specified/configured and the case where two CWs are specified/configured, the size of the antenna port field may be the same, and in this case, part/all of the bits for the antenna port field in the case where two CWs are specified/configured may be ignored or may be used for another usage (for example, error correction).

Note that, from among Category 1/2/3, which to support may be defined by using a UE capability. Capability information indicating supporting of Category 1/2 and capability information indicating supporting of Category 3 may be different from each other (such indication may be made in different pieces of information).

A UE not supporting Category 3 (having not reported the supporting) need not support Category-3 part of an antenna port table (or the UE may assume that the part is not indicated). The UE not supporting Category 3 need not assume that two CWs are configured in a case of a specific DMRS type (for example, DMRS type = enhanced type 1) and a specific maximum DMRS length (for example, maximum DMRS length = 1).

Note that, in the present disclosure, "supporting Category 3" and "two CWs are configured in a case of a specific DMRS type (for example, DMRS type = enhanced type 1) and a specific maximum DMRS length (for example, maximum DMRS length = 1)" may be interchangeably interpreted.

### <Supplements>

Each embodiment may be premised on a case where an FD-OCC having any length (for example, length of 4 or longer, length of 3 or shorter) is applied to a DMRS. In other words, in the present disclosure, a length of 4 and a specific length (for example, length of 6) may be interchangeably interpreted.

In the present disclosure, a case that the UE / base station uses (/ refers to / performs processing based on) a table is not limited to the meaning of use of the table itself, and may mean use of a sequence, list, function, or the like including information according to the table.

### {Notification of Information to UE}

Notification of any information to a UE (from a network (NW) (for example, a base station (BS))) (in other words, reception of any information from the BS at the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or any combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or any combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case where a specific condition is met. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information for at least one of the above-described embodiments;
- supporting the number of DMRS ports larger than that in any existing specification, for a PDSCH/PUSCH;
- supporting the number of DMRS ports larger than that in any existing specification by using a TD-OCC/FD-OCC/FDM, for a DMRS of a PDSCH/PUSCH;
- supporting an FD OCC having a length of 4/6;
- supporting Category 1/2/3 (category-1/2/3 DMRS port, category-1/2/3 DMRS port combination);
- supporting a restriction for MU-MIMO.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include information indicating enabling of an Rel-18 DMRS port, information indicating enabling of a function for each embodiment, and any RRC parameter for a specific release (for example, Rel. 18/19).

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1}

A terminal including:
a receiving section that receives, when a combination of a category-1 demodulation reference signal (DMRS) port and a category-2 DMRS port in at least one code division multiplexing (CDM) group is supported, downlink control information (DCI) indicating the combination and scheduling a shared channel for two codewords; and
a control section that controls transmission or reception of the shared channel on a basis of the combination, wherein
the combination includes an entry indicating at least one of a DMRS port across the CDM group and a DMRS port corresponding to a plurality of transmission/reception points.

### {Supplementary Note 2}

The terminal according to supplementary note 1, wherein the control section judges the category-2 DMRS port on a basis of an indicator indicating an offset of the category-2 DMRS port with respect to the category-1 DMRS port.

### {Supplementary Note 3}

The terminal according to supplementary note 1 or 2, wherein the control section controls transmission or reception of the shared channel on the basis of the combination, in a case where, for the shared channel, an enhanced-type-1 DMRS is configured and a maximum DMRS length is configured to 1.

### {Supplementary Note 4}

The terminal according to any one of supplementary notes 1 to 3, wherein the control section controls operations corresponding to a plurality of transmission/reception points, on a basis of information associated with one or more transmission/reception points included in the entry.

### (Supplementary Notes)

Regarding one embodiment of the present disclosure, the following supplementary notes of the invention will be given.

### {Supplementary Note 1}

A terminal including:
a receiving section that receives, when a combination of a category-1 demodulation reference signal (DMRS) port and a category-2 DMRS port in at least one code division multiplexing (CDM) group is supported, downlink control information (DCI) indicating the combination and scheduling a shared channel for two codewords; and
a control section that controls transmission or reception of the shared channel on a basis of the combination, wherein
the combination includes an entry indicating at least one of a DMRS port across the CDM group and a DMRS port corresponding to a plurality of transmission/reception points, and
the control section controls, when specific DMRS port mapping is assigned based on the combination, application of multi user multi input multi output (MU-MIMO).

### {Supplementary Note 2}

The terminal according to supplementary note 1, wherein the control section applies a restriction for the MU-MIMO, when specific DMRS port mapping is assigned based on the combination.

### {Supplementary Note 3}

The terminal according to supplementary note 1 or 2, wherein the control section assumes that, when specific DMRS port mapping is assigned based on the combination, remaining orthogonal DMRS ports are not associated with transmission of the shared channel to another UE.

### {Supplementary Note 4}

The terminal according to any one of supplementary notes 1 to 3, wherein the control section releases, when a specific DMRS port is configured, a restriction for the MU-MIMO in the specific DMRS port or in another DMRS port.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

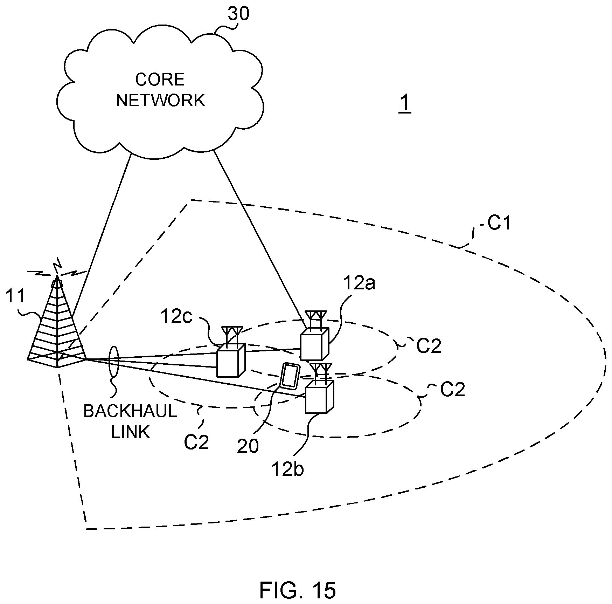

FIG. 15 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

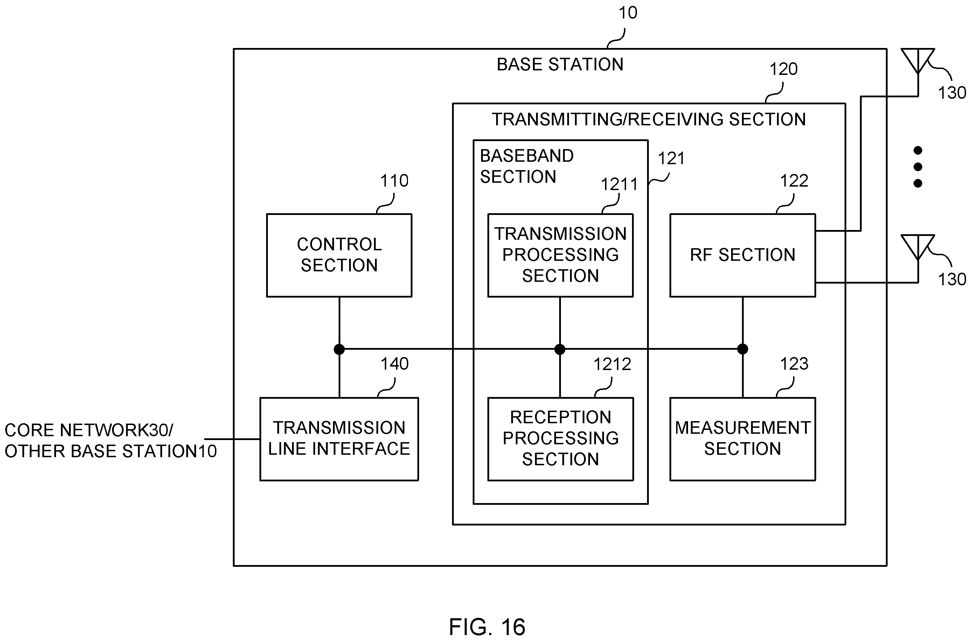

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

When a user terminal 20 supports a combination of a category-1 demodulation reference signal (DMRS) port and a category-2 DMRS port in at least one code division multiplexing (CDM) group, the transmitting/receiving section 120 may transmit, to the user terminal 20, downlink control information (DCI) that indicates the combination and that schedules a shared channel for two codewords. The control section 110 may control reception or transmission of the shared channel.

### (User Terminal)

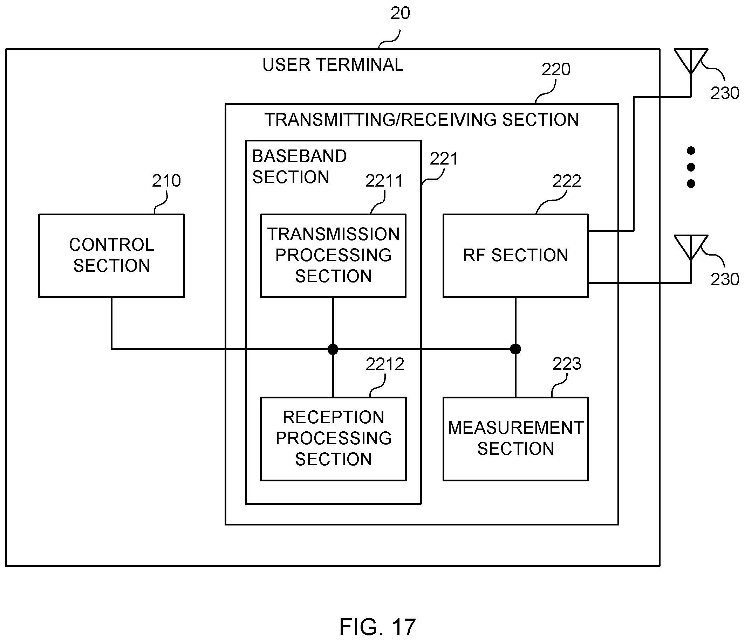

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

When a combination of a category-1 demodulation reference signal (DMRS) port and a category-2 DMRS port in at least one code division multiplexing (CDM) group is supported, the transmitting/receiving section 220 may receive downlink control information (DCI) that indicates the combination and that schedules a shared channel (for example, PDSCH/PUSCH) for two codewords. The control section 210 may control transmission or reception of the shared channel on the basis of the combination.

The control section 210 may control transmission or reception of the shared channel on the basis of the combination, in a case where, for the shared channel, an enhanced-type-1 DMRS is configured and a maximum DMRS length is configured to 1. The control section 210 may judge the category-2 DMRS port on the basis of an indicator indicating an offset of the category-2 DMRS port with respect to the category-1 DMRS port. The control section 210 may control transmission or reception of the shared channel on the basis of the combination, in a case where, for the shared channel, an enhanced-type-1 DMRS is configured and a maximum DMRS length is configured to 1. The control section 210 may control operations corresponding to a plurality of transmission/reception points, on the basis of information associated with one or more transmission/reception points included in the entry.

The control section 210 may control, when specific DMRS port mapping is assigned based on the combination, application of multi user multi input multi output (MU-MIMO). The control section 210 may apply a restriction for the MU-MIMO, when specific DMRS port mapping is assigned based on the combination. The control section 210 may assume that, when specific DMRS port mapping is assigned based on the combination, remaining orthogonal DMRS ports are not associated with transmission of the shared channel to another UE. The control section 210 may release, when a specific DMRS port is configured, a restriction for the MU-MIMO in the specific DMRS port or in another DMRS port.

The category-1 DMRS port may be a DMRS port of port number 0 or larger and 7 or smaller for an enhanced-type-1 DMRS or a DMRS port of port number 0 or larger and 11 or smaller for an enhanced-type-2 DMRS. The category-2 DMRS port may be a DMRS port of port number 8 or larger and 15 or smaller for an enhanced-type-1 DMRS or a DMRS port of port number 12 or larger and 23 or smaller for an enhanced-type-2 DMRS. Note that the port number in the present disclosure and a value obtained by adding/subtracting any value (for example, 1000) to/from a value indicated in the present disclosure may be interchangeably interpreted.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

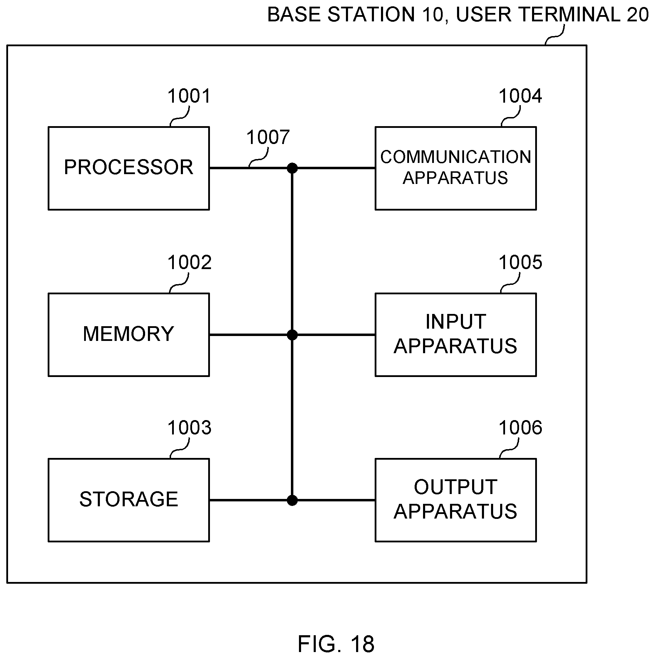

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B"**.**

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

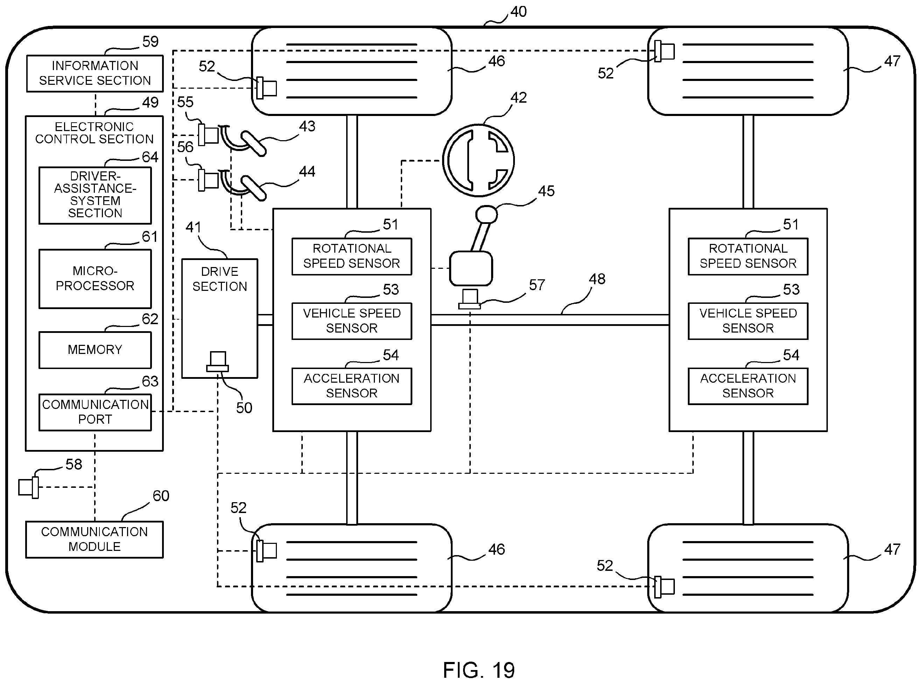

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions (determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives, when a combination of a category-1 demodulation reference signal (DMRS) port and a category-2 DMRS port in at least one code division multiplexing (CDM) group is supported, downlink control information (DCI) indicating the combination and scheduling a shared channel for two codewords; and
a control section that controls transmission or reception of the shared channel on a basis of the combination, wherein
the combination includes an entry indicating at least one of a DMRS port across the CDM group and a DMRS port corresponding to a plurality of transmission/reception points.

2. The terminal according to claim 1, wherein
the control section judges the category-2 DMRS port on a basis of an indicator indicating an offset of the category-2 DMRS port with respect to the category-1 DMRS port.

3. The terminal according to claim 1, wherein
the control section controls transmission or reception of the shared channel on the basis of the combination, in a case where, for the shared channel, an enhanced-type-1 DMRS is configured and a maximum DMRS length is configured to 1.

4. The terminal according to claim 1, wherein
the control section controls operations corresponding to a plurality of transmission/reception points, on a basis of information associated with one or more transmission/reception points included in the entry.

5. A radio communication method for a terminal, the radio communication method comprising:
receiving, when a combination of a category-1 demodulation reference signal (DMRS) port and a category-2 DMRS port in at least one code division multiplexing (CDM) group is supported, downlink control information (DCI) that indicates the combination and that schedules a shared channel for two codewords; and
controlling transmission or reception of the shared channel on a basis of the combination, wherein
the combination includes an entry indicating at least one of a DMRS port across the CDM group and a DMRS port corresponding to a plurality of transmission/reception points.

6. A base station comprising:
a transmitting section that transmits, when a terminal supports a combination of a category-1 demodulation reference signal (DMRS) port and a category-2 DMRS port in at least one code division multiplexing (CDM) group, downlink control information (DCI) to the terminal, the DCI indicating the combination and scheduling a shared channel for two codewords; and
a control section that controls reception or transmission of the shared channel, wherein
the combination includes an entry indicating at least one of a DMRS port across the CDM group and a DMRS port corresponding to a plurality of transmission/reception points.
